# EUROPÄISCHE PATENTSCHRIFT

(11) **EP 4 387 876 B1**
(45) Veröffentlichungstag und Bekanntmachung des Hinweises auf die Patenterteilung: **18.03.2026**
(21) Anmeldenummer: 22764393.9
(22) Anmeldetag: 09.08.2022
(51) Int. Cl.: B60T 7/04, B60T 7/12, B60T 8/176, B60T 8/1761, B60T 8/18, B60T 8/26, B60T 8/32, B60T 8/34, B60T 8/40, B60T 8/48, B60T 13/12, B60T 13/14, B60T 13/74, B60T 17/04, B60T 17/22

(54) **BREMSSYSTEM UND VERFAHREN ZUM ABBREMSEN EINES ZUMINDEST ZWEIACHSIGEN FAHRZEUGS**
BRAKE SYSTEM AND METHOD FOR BRAKING A VEHICLE HAVING AT LEAST TWO AXLES
SYSTÈME DE FREIN ET PROCÉDÉ DE FREINAGE D'UN VÉHICULE PRÉSENTANT AU MOINS DEUX ESSIEUX

(30) Priorität: 17.08.2021 DE 102021208993
(43) Veröffentlichungstag der Anmeldung: 26.06.2024
(73) Patentinhaber: Robert Bosch GmbH, 70442 Stuttgart (DE)
(72) Erfinder: MAHNKOPF, Dirk, 71634 Eglosheim (DE)
(86) Internationale Anmeldenummer: PCT/EP2022/072365
(87) Internationale Veröffentlichungsnummer: WO 2023/020897

(56) Entgegenhaltungen:
- WO-A1-2019/108761
- DE-A1- 102008 003 664
- DE-A1- 102010 030 921
- DE-A1- 102013 215 153
- DE-A1- 102014 205 431
- DE-A1- 102015 208 876
- DE-A1- 102015 209 388
- DE-A1- 102017 208 374

## Beschreibung

Die Erfindung betrifft ein Bremssystem für ein zumindest zweiachsiges Fahrzeug. Ebenso betrifft die Erfindung ein Verfahren zum Abbremsen eines zumindest zweiachsigen Fahrzeugs.

### Stand der Technik

Aus dem Stand der Technik, wie beispielsweise der DE 10 2016 208 529 A1, sind Bremssysteme für zweiachsige Fahrzeuge bekannt, welche genau zwei Bremskreise mit je zwei Radbremszylindern aufweisen, von denen jeder Radbremszylinder an einem Hauptbremszylinder des jeweiligen Bremssystems hydraulisch angebunden ist.

Außerdem beschreibt die DE 10 2010 030 921 A1 ein Bremssystem für ein Fahrzeug mit zwei an einem Hauptbremszylinder des Bremssystems hydraulisch angebundenen Radbremszylindern und zwei weiteren an einem Bremsmediumreservoir des Bremssystems hydraulisch angebundenen Radbremszylindern, wobei das Bremsmediumreservoir über mindestens eine Zufuhröffnung, wie z.B. eine Schnüffelbohrung, mit dem Hauptbremszylinder hydraulisch verbunden ist.

### Offenbarung der Erfindung

Die Erfindung betrifft ein Bremssystem für ein zumindest zweiachsiges Fahrzeug mit den Merkmalen des Anspruchs 1 und ein Verfahren zum Abbremsen eines zumindest zweiachsigen Fahrzeugs mit den Merkmalen des Anspruchs 9.

### Vorteile der Erfindung

Die vorliegende Erfindung schafft Bremssysteme für zumindest zweiachsige Fahrzeuge, welche einen vergleichsweise kompakten Aufbau aufweisen und zu relativ geringen Herstellungskosten produzierbar sind. Wie anhand der nachfolgenden Beschreibung deutlich wird, entfallen bei einem erfindungsgemäßen Bremssystem die herkömmlichen Hydraulikleitungen zwischen den zumindest zwei Achsen des jeweils mit dem Bremssystem bestückten Fahrzeugs. Dies bewirkt eine Einsparung von relativ viel Bauraum an dem jeweiligen Fahrzeug. Zusätzlich erleichtert sich damit auch eine Montage des erfindungsgemäßen Bremssystems an dem jeweiligen Fahrzeug.

Ein besonderer Vorteil der mittels der vorliegenden Erfindung geschaffenen Bremssysteme ist die realisierte Ausbildung zumindest der ersten Achseinheit als offenes System derart, dass die erste Achseinheit zum Druckaufbau und Druckabbau in ihrem ersten Radbremszylinder und ihrem zweiten Radbremszylinder mit gleich ausgerichteten Bremsflüssigkeitsströmen durchgespült wird. Die mittels der motorisierten Bremsdruckaufbauvorrichtung aus dem angebundenen Bremsflüssigkeitsreservoir angesaugten und später aus dem ersten Radbremszylinder und/oder dem zweiten Radbremszylinder in das Bremsflüssigkeitsreservoir ausgelassenen Bremsflüssigkeitsströme bewirken ein derart "gründliches" Durchspülen der ersten Achseinheit, dass kein Ansammeln von Luft in der ersten Achseinheit möglich ist. Somit muss keine Funktionsbeeinträchtigung bei einem erfindungsgemäßen Bremssystem aufgrund von einem Ansammeln von Luft in seiner ersten Achseinheit befürchtet werden.

Wie anhand der nachfolgenden Beschreibung außerdem deutlich wird, kann bei einem erfindungsgemäßen Bremssystem der jeweilige Bremsdruck in den Radbremszylindern seiner ersten Achseinheit vollautomatisch/vollautonom, d.h. ohne eine Bereitstellung einer Fahrerbremskraft durch einen Fahrer, eingestellt werden. Man kann dies auch als eine vollautomatische/vollautonome Druckstellung bezeichnen.

Die erste Achseinheit ist vorzugsweise eine "Vorderachseinheit". Bei den erfindungsgemäßen Bremssystemen können somit ein erster Bremsdruck in dem als Vorderachs-Radbremszylinder eingesetzten ersten Radbremszylinder und ein zweiter Bremsdruck in dem ebenfalls als Vorderachs-Radbremszylinder genutzten zweiten Radbremszylinder vollautomatisch/vollautonom, d.h. ohne eine Bereitstellung einer Fahrerbremskraft durch einen Fahrer des jeweiligen Fahrzeugs, eingestellt werden. Wahlweise kann die erste Achseinheit jedoch auch eine "Hinterachseinheit" mit dem als Hinterachs-Radbremszylinder eingesetzten ersten Radbremszylinder und dem als Hinterachs-Radbremszylinder genutzten zweiten Radbremszylinder sein. Auch in diesem Fall können der erste Bremsdruck in dem ersten Radbremszylinder und der zweite Bremsdruck in dem zweiten Radbremszylinder vollautomatisch/vollautonom eingestellt werden.

Beispielsweise kann ein Bremskreis der ersten Achseinheit zumindest den ersten Radbremszylinder, das erste Auslassventil, den zweiten Radbremszylinder und das zweite Auslassventil umfassen, wobei die motorisierte Bremsdruckaufbauvorrichtung in den Bremskreis integriert oder an dem Bremskreis hydraulisch angebunden ist. Somit ist eine Ausbildung der ersten Achseinheit als einkreisige erste Achseinheit möglich.

Alternativ kann ein erster Bremskreis der ersten Achseinheit zumindest den ersten Radbremszylinder und das erste Auslassventil umfassen und ein zweiter Bremskreis der ersten Achseinheit kann zumindest den zweiten Radbremszylinder und das zweite Auslassventil umfassen, wobei der erste Bremskreis an einer ersten Kammer der als Kolben-Zylinder-Vorrichtung ausgebildeten motorisierten Bremsdruckaufbauvorrichtung hydraulisch angebunden ist und der zweite Bremskreis an einer zweiten Kammer der Kolben-Zylinder-Vorrichtung hydraulisch angebunden ist. Durch die hier beschriebene zweikreisige Ausbildung der ersten Achseinheit ist eine Robustheit der ersten Achseinheit gegenüber einer an einem ihrer Bremskreise auftretenden Leckage verbessert. Selbst wenn während eines autonomen/automatischen Fahrens des damit ausgestatteten Fahrzeugs eine Leckage an einem der beiden Bremskreise der ersten Achseinheit auftritt, kann das damit ausgestattete Fahrzeug zumindest noch in seinen sicheren Stillstand überführt werden. bei dem hier beschriebenen Bremssystem entfallen die herkömmlichen Hydraulikleitungen zwischen der ersten Achse und der zweiten Achse des mit dem Bremssystem ausgestatteten Fahrzeugs.

Als vorteilhafte Weiterbildung kann die erste Achseinheit noch zusätzlich einen Hauptbremszylinder umfassen, an welchem ein Bremsbetätigungselement des Fahrzeugs derart anbindbar oder angebunden ist, dass mindestens ein mindestens eine Kammer des Hauptbremszylinders begrenzender Kolben des Hauptbremszylinders mittels einer Betätigung des Bremsbetätigungselements durch einen Fahrer des Fahrzeugs verstellbar ist, und Bremsflüssigkeit aus der mindestens einen Kammer des Hauptbremszylinders zumindest über mindestens eine ventillose oder ventilbestückte Verbindungsleitung in den ersten Radbremszylinder und/oder in den zweiten Radbremszylinder transferierbar ist. Der Fahrer hat somit die Möglichkeit, mittels seiner Fahrerbremskraft direkt in die Radbremszylinder der ersten Achseinheit einzubremsen, um auf diese Weise noch einen Bremsdruckaufbau in den Radbremszylindern der ersten Achseinheit zu bewirken. Die hier beschriebene Ausführungsform des Bremssystems weist damit auch eine mechanische Rückfallebene auf.

Bevorzugterweise ist das erste Auslassventil über einen Verbindungsabschnitt mit dem zweiten Auslassventil hydraulisch verbunden und die einzige ventillose oder ventilbestückte Verbindungsleitung mündet an dem Verbindungsabschnitt, wobei ein parallel zu dem ersten Auslassventil angeordnetes erstes Rückschlagventil derart ausgerichtet ist, dass ein Bremsflüssigkeitstransfer in einer Richtung von dem ersten Radbremszylinder zu einer Mündung der Verbindungsleitung an dem Verbindungsabschnitt mittels des ersten Rückschlagventils unterbunden ist, und/oder ein parallel zu dem zweiten Auslassventil angeordnetes zweites Rückschlagventil derart ausgerichtet ist, dass ein Bremsflüssigkeitstransfer in einer Richtung von dem zweiten Radbremszylinder zu der Mündung der Verbindungsleitung an dem Verbindungsabschnitt mittels des zweiten Rückschlagventils unterbunden ist. Somit kann selbst bei einem geschlossenen Vorliegen des ersten Auslassventils und/oder des zweiten Auslassventils in der mechanischen Rückfallebene Bremsflüssigkeit aus dem Hauptbremszylinder über das erste Rückschlagventil und/oder das zweite Rückschlagventil in den mindestens einen jeweils nachgeordneten Radbremszylinder der ersten Achseinheit transferiert werden.

In einer weiteren vorteilhaften Ausführungsform des Bremssystems ist die motorisierte Bremsdruckaufbauvorrichtung eine Kolben-Zylinder-Vorrichtung mit mindestens einer Kammer und der Hauptbremszylinders ist über die mindestens eine ventillose oder ventilbestückte Verbindungsleitung derart an der Kolben-Zylinder-Vorrichtung hydraulisch angebunden, dass die mindestens eine Verbindungsleitung jeweils eine Verbindungsleitungsmündung an der mindestens einen Kammer der Kolben-Zylinder-Vorrichtung aufweist, wobei die mindestens eine Verbindungsleitungsmündung derart ausgebildet ist, dass, sofern mindestens ein verstellbarer Kolben der Kolben-Zylinder-Vorrichtung in seiner jeweiligen Ausgangsstellung vorliegt, Bremsflüssigkeit aus dem Hauptbremszylinder über die mindestens eine Verbindungsleitung und ihre jeweilige Verbindungsleitungsmündung in die mindestens eine Kammer der Kolben-Zylinder-Vorrichtung transferierbar ist, während, sofern der mindestens eine verstellbare Kolben aus seiner jeweiligen Ausgangsstellung verstellt ist, ein Bremsflüssigkeitstransfer aus dem Hauptbremszylinder über die mindestens eine Verbindungsleitung und ihre jeweilige Verbindungsleitungsmündung in die mindestens eine Kammer der Kolben-Zylinder-Vorrichtung mittels mindestens eines an dem mindestens einen verstellbaren Kolben der Kolben-Zylinder-Vorrichtung und/oder in der mindestens einen Kammer der Kolben-Zylinder-Vorrichtung befestigten Dichtungselements unterbunden ist. Während eines Betriebs der Kolben-Zylinder-Vorrichtung ist der Hauptbremszylinder somit automatisch von der Kolben-Zylinder-Vorrichtung "abgekoppelt". Trotzdem ist die hier beschriebene Ausführungsform bei einem Ausfall der Kolben-Zylinder-Vorrichtung automatisch in ihre Rückfallebene überführt, in welcher der Fahrer mittels seiner Fahrerbremskraft über den Hauptbremszylinder und die Kolben-Zylinder-Vorrichtung in die Radbremszylinder der ersten Achseinheit einbremsen kann. Ein Schalten eines Ventils ist somit zum Überführen der hier beschriebenen Ausführungsform des Bremssystems in die mechanische Rückfallebene nicht notwendig.

Als zusätzliche vorteilhafte Weiterbildung können der erste Radbremszylinder über ein erstes Trennventil und/oder der zweite Radbremszylinder über ein zweites Trennventil mit der motorisierten Bremsdruckaufbauvorrichtung hydraulisch verbunden sein. Dies ermöglicht eine radindividuelle Druckstellung in beiden Radbremszylindern der ersten Achseinheit. Man kann dies auch als eine radindividuelle vollautomatische/vollautonome Druckstellung in den Radbremszylindern der ersten Achseinheit des hier beschriebenen erfindungsgemäßen Bremssystems umschreiben. Es wird jedoch darauf hingewiesen, dass ein Schalten des ersten Trennventils und/oder des zweiten Trennventils zur radindividuellen vollautomatischen/vollautonomen Druckstellung in den Radbremszylindern in der Regel nur für eine Modulation, wie beispielsweise eine ESP- oder ABS-Regelung, nötig ist. Während eines Betriebs des hier beschriebenen erfindungsgemäßen Bremssystems treten deshalb relativ selten Ventilschaltgeräusche auf. Man spricht deshalb auch von einer guten NVH-Charakteristik (Noise Vibration Harshness-Charakteristik) des hier beschriebenen erfindungsgemäßen Bremssystems.

Als weitere vorteilhafte Weiterbildung kann ein parallel zu dem ersten Trennventil angeordnetes drittes Rückschlagventil derart ausgerichtet sein, dass ein Bremsflüssigkeitstransfer in einer Richtung von dem ersten Radbremszylinder zu der motorisierten Bremsdruckaufbauvorrichtung mittels des dritten Rückschlagventils unterbunden ist. Alternativ oder ergänzend kann auch ein parallel zu dem zweiten Trennventil angeordnetes viertes Rückschlagventil derart ausgerichtet sein, dass ein Bremsflüssigkeitstransfer in einer Richtung von dem zweiten Radbremszylinder zu der motorisierten Bremsdruckaufbauvorrichtung mittels des vierten Rückschlagventils unterbunden ist. Bei der hier beschriebenen Ausführungsform des Bremssystems kann bei einem "Klemmen" des ersten/zweiten Trennventils in seinem geschlossenen Zustand die erste/zweite motorisierte Bremsdruckaufbauvorrichtungen trotzdem noch Bremsflüssigkeit über das dritte/vierte Rückschlagventil in den ersten/zweiten Radbremszylinder transferieren. Die zusätzliche Ausstattung des Bremssystems mit dem dritten Rückschlagventil und/oder dem vierten Rückschlagventil erhöht somit einen Sicherheitsstandard des jeweiligen Bremssystems.

Die vorausgehend beschriebenen Vorteile sind auch bei einem Ausführen eines korrespondierenden Verfahrens zum Abbremsen eines zumindest zweiachsigen Fahrzeugs gewährleistet. Es wird ausdrücklich darauf hingewiesen, dass das Verfahren zum Abbremsen eines zumindest zweiachsigen Fahrzeugs entsprechend den oben erläuterten Ausführungsformen des Bremssystems weitergebildet werden kann.

### Kurze Beschreibung der Zeichnungen

Weitere Merkmale und Vorteile der vorliegenden Erfindung werden nachfolgend anhand der Figuren erläutert. Es zeigen:
- Fig. 1 bis 13: schematische Teildarstellungen von Ausführungsformen des Bremssystems und
- Fig. 14: ein Flussdiagramm zum Erläutern einer Ausführungsform des Verfahrens zum Abbremsen eines zumindest zweiachsigen Fahrzeugs.

### Ausführungsformen der Erfindung

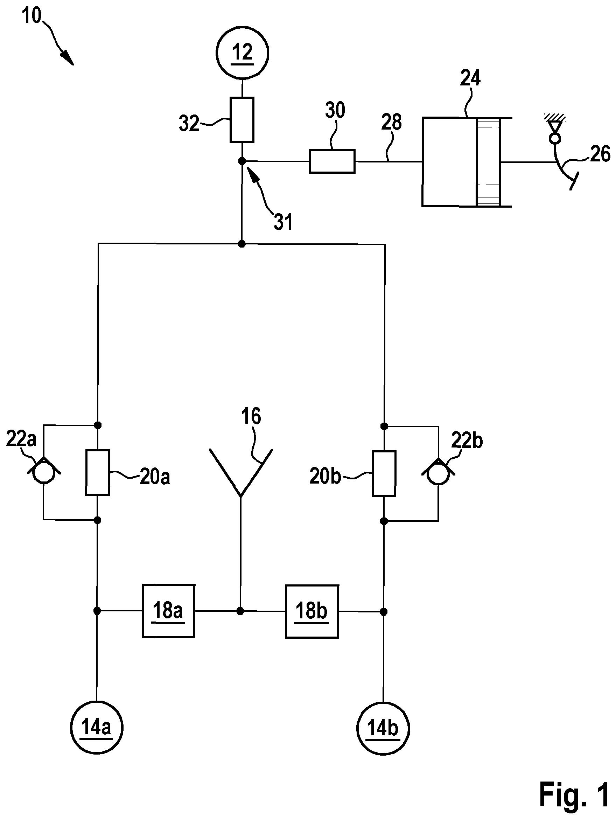

Fig. 1 zeigt eine schematische Teildarstellung einer ersten Ausführungsform des Bremssystems.

Das in Fig. 1 schematisch dargestellte Bremssystem ist an einem zumindest zweiachsigen Fahrzeug/Kraftfahrzeug montierbar/montiert, wobei eine Verwendbarkeit des Bremssystems auf keinen speziellen Fahrzeugtyp/Kraftfahrzeugtyp des zweiachsigen Fahrzeugs/Kraftfahrzeugs beschränkt ist.

Das Bremssystem der Fig. 1 weist eine an einer ersten Achse des Fahrzeugs montierbare/montierte erste Achseinheit 10 auf. Außerdem hat das Bremssystem noch zumindest eine an einer zweiten Achse des Fahrzeugs montierbare/montierte und hydraulisch von der ersten Achseinheit 10 getrennt ausgebildete zweite Achseinheit, welche jedoch in Fig. 1 nicht bildlich wiedergegeben ist. Die zweite Achseinheit ist derart ausgebildet, dass mittels eines Betriebs der zweiten Achseinheit ein erstes Rad der zweiten Achse und ein zweites Rad der zweiten Achse abbremsbar sind/abgebremst werden. Sofern das mit dem Bremssystem ausgestattete Fahrzeug mehr als zwei Achsen aufweist, kann das Bremssystem noch zumindest eine dritte Achseinheit, welche hydraulisch von der ersten Achseinheit 10 und der zweiten Achseinheit getrennt ausgebildet ist, umfassen, wobei auch zumindest die eine dritte Achseinheit an zumindest einer dritten Achse des Fahrzeugs montierbar/montiert sein kann und derart ausgebildet ist, dass mittels eines Betriebs zumindest der einen dritten Achseinheit ein erstes Rad zumindest der einen dritten Achse und ein zweites Rad zumindest der einen dritten Achse abbremsbar sind/abgebremst werden.

Unter der hydraulisch getrennten Ausbildung der ersten Achseinheit 10 von der zweiten Achseinheit ist zu verstehen, dass keine hydraulische Leitung zwischen der ersten Achseinheit 10 und der zweiten Achseinheit verläuft. Insbesondere kann die erste Achseinheit 10 derart hydraulisch von der zweiten Achseinheit getrennt ausgebildet sein, dass die erste Achseinheit 10 und die zweite Achseinheit höchstens über mindestens eine Signal- und/oder Busleitung miteinander verbunden sind. Da die erste Achseinheit 10 hydraulisch getrennt von der zweiten Achseinheit ausgebildet ist, entfallen bei dem Bremssystem der Fig. 1 die herkömmlicherweise benötigten Hydraulikleitungen zwischen den mit den Radbremszylindern bestückten Achsen. Das Bremssystem weist damit einen sehr kompakten und bauraumsparenden Aufbau auf. Insbesondere ist ein modularer Aufbau des Bremssystems zu vergleichsweise geringen Herstellungskosten realisiert. Die erste Achseinheit 10 und die zweite Achseinheit können außerdem als zwei getrennte Einheiten an dem damit bestückten zweiachsigen Fahrzeug montiert werden. Dies erleichtert auch eine Montage des hier beschriebenen Bremssystems. Entsprechend ist auch unter der hydraulisch getrennten Ausbildung zumindest der einen dritten Achseinheit von der ersten Achseinheit 10 und der zweiten Achseinheit zu verstehen, dass keine hydraulische Leitung zwischen zumindest der einen dritten Achseinheit und der ersten Achseinheit 10 oder der zweiten Achseinheit verläuft.

Vorzugsweise ist die erste Achseinheit 10 als "Vorderachseinheit" an der Vorderachse des Fahrzeugs montierbar/montiert, während die zweite Achseinheit und evtl. zumindest die eine dritte Achseinheit als "Hinterachseinheit" an der Hinterachse des Fahrzeugs und/oder als "mittlere Achseinheit" an mindestens einer zwischen der Vorderachse und der Hinterachse liegenden Achse des Fahrzeug montierbar/montiert ist. In diesem Fall dient die erste Achseinheit 10 zum Abbremsen der Vorderräder des Fahrzeugs, während mittels der zweiten Achseinheit und evtl. zumindest der einen dritten Achseinheit die Hinterräder und/oder die mittleren Räder des Fahrzeugs abbremsbar sind. Alternativ kann die erste Achseinheit 10 jedoch auch als "Hinterachseinheit" an der Hinterachse des Fahrzeugs oder als "mittlere Achseinheit" an der mindestens einen zwischen der Vorderachse und der Hinterachse liegenden Achse des Fahrzeugs montierbar/montiert sein.

Die erste Achseinheit 10 weist eine motorisierte Bremsdruckaufbauvorrichtung 12, einen ersten Radbremszylinder 14a und einen zweiten Radbremszylinder 14b auf. Die motorisierte Bremsdruckaufbauvorrichtung 12 ist derart ausgebildet, dass mittels eines Betriebs der motorisierten Bremsdruckaufbauvorrichtung 12 Bremsflüssigkeit aus einem angebundenen Bremsflüssigkeitsreservoir 16 in den ersten Radbremszylinder 14a und in den zweiten Radbremszylinder 14b transferierbar ist/transferiert wird. Auf diese Weise sind ein erster Bremsdruck in dem ersten Radbremszylinder 14a und ein zweiter Bremsdruck in dem zweiten Radbremszylinder 14b so steigerbar, dass ein dem ersten Radbremszylinder 14a zugeordnetes erstes Rad der ersten Achse und ein dem zweiten Radbremszylinder 14b zugeordnetes zweites Rad der ersten Achse abbremsbar sind/abgebremst werden. Außerdem umfasst die erste Achseinheit 10 noch ein dem ersten Radbremszylinder 14a zugeordnetes erstes Auslassventil 18a und ein dem zweiten Radbremszylinder 14b zugeordnetes zweites Auslassventil 18b. Somit ist bei der ersten Achseinheit 10 sichergestellt, dass Bremsflüssigkeit aus dem ersten Radbremszylinder 14a über das erste Auslassventil 18a und aus dem zweiten Radbremszylinder 14b über das zweite Auslassventil 18b in das angebundene Bremsflüssigkeitsreservoir 16 ablassbar ist. Vorzugsweise sind das erste Auslassventil 18a und das zweite Auslassventil 18b je ein stromlos geschlossenes Ventil.

Bei der ersten Achseinheit 10 des Bremssystems der Fig. 1 sind die mittels der motorisierten Bremsdruckaufbauvorrichtung 12 aus dem angebundenen Bremsflüssigkeitsreservoir 16 angesaugten und später aus dem ersten Radbremszylinder 14a und/oder dem zweiten Radbremszylinder 14b in das Bremsflüssigkeitsreservoir 16 ausgelassenen Bremsflüssigkeitsströme immer gleichausgerichtet. Zum Druckaufbau und Druckabbau in ihrem ersten Radbremszylinder 14a und ihrem zweiten Radbremszylinder 14b wird die erste Achseinheit 10 immer mit gleichausgerichteten Bremsflüssigkeitsströmen durchgespült. Die erste Achseinheit 10 des Bremssystems der Fig. 1 ist somit ein offenes System. Die in der ersten Achseinheit 10 auftretenden gleichausgerichteten Bremsflüssigkeitsströme bewirken außerdem ein derart "gründliches" Durchspülen der ersten Achseinheit 10, dass kein Ansammeln von Luft in der ersten Achseinheit 10 möglich ist. Damit müssen auch keine durch Ansammeln von Luft in der ersten Achseinheit 10 ausgelöste Funktionsbeeinträchtigungen während eines Betriebs des Bremssystems der Fig. 1 befürchtet werden.

Da bei dem hier beschriebenen Bremssystem zumindest in seiner ersten Achseinheit 10 ein Ansammeln von Luft durch das häufige und "gründliche" Durchspülen der ersten Achseinheit 10 mit gleichausgerichteten Bremsflüssigkeitsströmen verlässlich verhindert ist, kann die motorisierte Bremsdruckaufbauvorrichtung 12 vorteilhaft zum Bewirken eines vollautomatischen/vollautonomen Bremsdruckaufbaus in den Radbremszylindern 14a und 14b der ersten Achseinheit 10 eingesetzt werden. Somit können sowohl der erste Bremsdruck in dem ersten Radbremszylinder 16a als auch der zweite Bremsdruck in dem zweiten Radbremszylinder 16b vollautomatisch/vollautonom, d.h. ohne eine Bereitstellung einer Fahrerbremskraft durch einen Fahrer des jeweiligen Fahrzeugs, aufgebaut/gesteigert werden. Die erste Achseinheit 10 eignet sich somit besonders gut zum autonomen/automatischen Abbremsen des damit ausgestatteten Fahrzeugs, insbesondere während einer vollautonomen/vollautomatischen Fahrt des jeweiligen Fahrzeugs.

Außerdem können für die erste Achseinheit 10 viele "gleiche" Teile, d.h. Teile des gleichen Typs, eingesetzt werden. Die erste Achseinheit 10 ist deshalb vergleichsweise kostengünstig und unter Nutzung herkömmlicherweise bereits verwendeter Bremssystemkomponenten herstellbar.

Die motorisierte Bremsdruckaufbauvorrichtung 12 kann beispielsweise mindestens eine Pumpe sein. Die erste Achseinheit 10 ist damit relativ kostengünstig ausbildbar. Die in Fig. 1 bildlich wiedergegebene Ausbildung der motorisierten Bremsdruckaufbauvorrichtung 12 der ersten Achseinheit 10 als die mindestens eine Pumpe ist jedoch nur beispielhaft zu interpretieren.

Als vorteilhafte Weiterbildung ist bei der ersten Achseinheit 10 der erste Radbremszylinder 14a über ein erstes Trennventil 20a mit der motorisierten Bremsdruckaufbauvorrichtung 12 hydraulisch verbunden. Der erste Radbremszylinder 14a ist somit über ein Schließen des ersten Trennventils 20a von der motorisierten Bremsdruckaufbauvorrichtung 12 abkoppelbar/abgekoppelt, während Bremsflüssigkeit mittels der motorisierten Bremsdruckaufbauvorrichtung 12 trotzdem in den zweiten Radbremszylinder 14b transferierbar ist/transferiert wird. Alternativ oder ergänzend kann auch der zweite Radbremszylinder 14b über ein zweites Trennventil 20b mit der motorisierten Bremsdruckaufbauvorrichtung 12 hydraulisch verbunden sein. Gegebenenfalls ist auch der zweite Radbremszylinder 14b über ein Schließen des zweiten Trennventils 20b von der motorisierten Bremsdruckaufbauvorrichtung 12 abkoppelbar/abgekoppelt, während mittels eines Betriebs der motorisierten Bremsdruckaufbauvorrichtung 12 (weiterhin) Bremsflüssigkeit in den ersten Radbremszylinder 14a transferierbar ist/transferiert wird. Mittels der Ausstattung der ersten Achseinheit 10 mit dem ersten Trennventil 20a und/oder dem zweiten Trennventil 20b ist somit eine radindividuelle Druckstellung in beiden Radbremszylindern 14a und 14b der ersten Achseinheit 10 des Bremssystems ausführbar. Als radindividuelle vollautomatische/vollautonome Druckstellung in den Radbremszylindern 14a und 14b ist beispielsweise eine ESP- oder ABS-Regelung möglich.

Außerdem kann bei einer Leckage an einem der beiden Radbremszylinder 14a und 14b der ersten Achseinheit 10 durch Schließen des vorgeordneten Trennventils 20a oder 20b der jeweilige Radbremszylinder 14a oder 14b derart von der motorisierten Bremsdruckaufbauvorrichtung 12 abgekoppelt werden, dass mittels der motorisierten Bremsdruckaufbauvorrichtung 12 in dem anderen der beiden Radbremszylinder 14a und 14b noch eine vollautomatische/vollautonome Druckstellung möglich ist. Bei dem Bremssystem der Fig. 1 ist deshalb mittels weniger Modifikationen eine hohe Redundanz der ersten Achseinheit 10 erreicht. Das mindestens eine Trennventil 20a und 20b der ersten Achseinheit 10 kann wahlweise ein Schaltventil oder ein zur Differenzdruckeinstellung geeignetes stetig stellbares Ventil sein. Vorzugsweise ist das mindestens eine Trennventil 20a und 20b je ein stromlos offenes Ventil.

Optionaler Weise kann die erste Achseinheit 10 auch ein parallel zu dem ersten Trennventil 20a angeordnetes erstes Trennventil-Rückschlagventil 22a haben, welches derart ausgerichtet ist, dass ein Bremsflüssigkeitstransfer in einer Richtung von dem ersten Radbremszylinder 14a zu der motorisierten Bremsdruckaufbauvorrichtung 12 mittels des ersten Trennventil-Rückschlagventils 22a unterbunden ist. Bei einem "Klemmen" des ersten Trennventils 20a in seinem geschlossenen Zustand kann die motorisierte Bremsdruckaufbauvorrichtungen 12 somit Bremsflüssigkeit über das erste Trennventil-Rückschlagventil 22a in den ersten Radbremszylinder 14a transferieren. Entsprechend kann auch ein parallel zu dem zweiten Trennventil 20b angeordnetes zweites Trennventil-Rückschlagventil 22b, welches derart ausgerichtet ist, dass ein Bremsflüssigkeitstransfer in einer Richtung von dem zweiten Radbremszylinder 14b zu der motorisierten Bremsdruckaufbauvorrichtung 12 mittels des zweiten Trennventil-Rückschlagventils 22b unterbunden ist, vorteilhaft sein. In diesem Fall kann auch bei einem "Klemmen" des zweiten Trennventils 20b in seinem geschlossenen Zustand die motorisierte Bremsdruckaufbauvorrichtungen 12 noch Bremsflüssigkeit über das zweite Trennventil-Rückschlagventil 22b in den zweiten Radbremszylinder 14b transferieren. Die zusätzliche Ausstattung des Bremssystems/seiner ersten Achseinheit 10 mit dem mindestens einen Trennventil-Rückschlagventil 22a und 22b erhöht somit einen Sicherheitsstandard des jeweiligen Bremssystems.

Als weitere vorteilhafte Weiterbildung hat die erste Achseinheit 10 der Fig. 1 zusätzlich noch einen Hauptbremszylinder 24, an welchem ein Bremsbetätigungselement 26 des Fahrzeugs derart anbindbar/angebunden ist, dass mindestens ein mindestens eine Kammer des Hauptbremszylinders 24 begrenzender Kolben des Hauptbremszylinders 24 mittels einer Betätigung des Bremsbetätigungselements 26 durch einen Fahrer des Fahrzeugs verstellbar ist/verstellt wird. Das Bremsbetätigungselement 26 kann beispielsweise ein Bremspedal sein. Mittels der Betätigung des Bremsbetätigungselements 26 durch den Fahrer kann Bremsflüssigkeit aus der mindestens einen Kammer des Hauptbremszylinders 24 zumindest über mindestens eine ventillose oder ventilbestückte Verbindungsleitung 28 in den ersten Radbremszylinder 14a und/oder in den zweiten Radbremszylinder 14b transferiert werden. An dem Bremssystem der Fig. 1 ist somit eine mechanische Rückfallebene ausgebildet, in welcher, insbesondere bei einem Ausfall der motorisierten Bremsdruckaufbauvorrichtung 12, der Fahrer mittels seiner auf das Bremsbetätigungselement 26 aufgebrachten Fahrerbremskraft noch einen Bremsdruckaufbau in den Radbremszylindern 14a und 14b der ersten Achseinheit 10 bewirken kann. Somit kann der Fahrer selbst bei einem Ausfall des Fahrzeugbordnetzes seines Fahrzeugs das Fahrzeug noch verlässlich mittels der in den Radbremszylindern 14a und 14b der ersten Achseinheit 10 bewirkten Bremsdrucksteigerung in den Stillstand überführen.

Mindestens ein Hauptbremszylinder-Abkopplungsventil 30 kann in die mindestens eine Verbindungsleitung 28 eingesetzt sein. Während eines Betriebs der motorisierten Bremsdruckaufbauvorrichtung 12 kann der Hauptbremszylinder 24 somit durch Schließen des mindestens einen Hauptbremszylinder-Abkopplungsventils 30 derart von der motorisierten Bremsdruckaufbauvorrichtung 12 entkoppelt sein/werden, dass die auf das Bremsbetätigungselement 26 aufgebrachte Fahrerbremskraft keinen Einfluss auf den in den Radbremszylindern 14a und 14b jeweils vorliegenden Bremsdruck hat. Das mindestens eine Hauptbremszylinder-Abkopplungsventil 30 kann wahlweise ein Schaltventil oder ein zur Differenzdruckeinstellung geeignetes stetig stellbares Ventil sein. Das mindestens eine Hauptbremszylinder-Abkopplungsventil 30 ist vorzugsweise ein stromlos offenes Ventil. Obwohl in Fig. 1 nicht dargestellt, kann noch ein Simulator an dem Hauptbremszylinder 24 angebunden sein, so dass der bei einem geschlossenen Vorliegen des mindestens einen Hauptbremszylinder-Abkopplungsventils 30 das Bremsbetätigungselement 26 betätigende Fahrer ein standardgemäßes Bremsbetätigungsgefühl/Pedalgefühl hat.

Lediglich beispielhaft hat bei der ersten Achseinheit 10 der Fig. 1 die mit dem einzigen Hauptbremszylinder-Abkopplungsventil 30 bestückte einzige Verbindungsleitung 28 an einem von dem Hauptbremszylinder 24 weg gerichteten Ende eine Mündung 31 an einem Leitungsabschnitt, welcher sich von der motorisierten Bremsdruckaufbauvorrichtung 12 zu den Radbremszylindern 14a und 14b der ersten Achseinheit 10, bzw. dem mindestens einen den Radbremszylindern 14a und 14b der ersten Achseinheit 10 vorgeordneten Trennventil 20a und 20b, aufgabelt. Vorteilhafterweise kann noch ein weiteres Abkopplungsventil 32 derart zwischen der Mündung 31 der einzigen Verbindungsleitung 28 an dem Leitungsabschnitt und der motorisierten Bremsdruckaufbauvorrichtung 12 angeordnet sein, dass mittels eines Schließens des Abkopplungsventils 32 ein Bremsflüssigkeitstransfer von der Verbindungsleitung 28 zu der motorisierten Bremsdruckaufbauvorrichtung 12 unterbunden ist. Auf diese Weise kann mittels eines Schließens des Abkopplungsventils 32 sichergestellt werden, dass die motorisierten Bremsdruckaufbauvorrichtung 12 während des mechanischen Rückfallmodus nicht als "Volumensenke" die mittels der Fahrerbremskraft bewirkte Bremsdrucksteigerung in den Radbremszylindern 14a und 14b der ersten Achseinheit 10 beeinträchtigt. Vorzugsweise ist das Abkopplungsventil 32 ein stromlos geschlossenes Ventil.

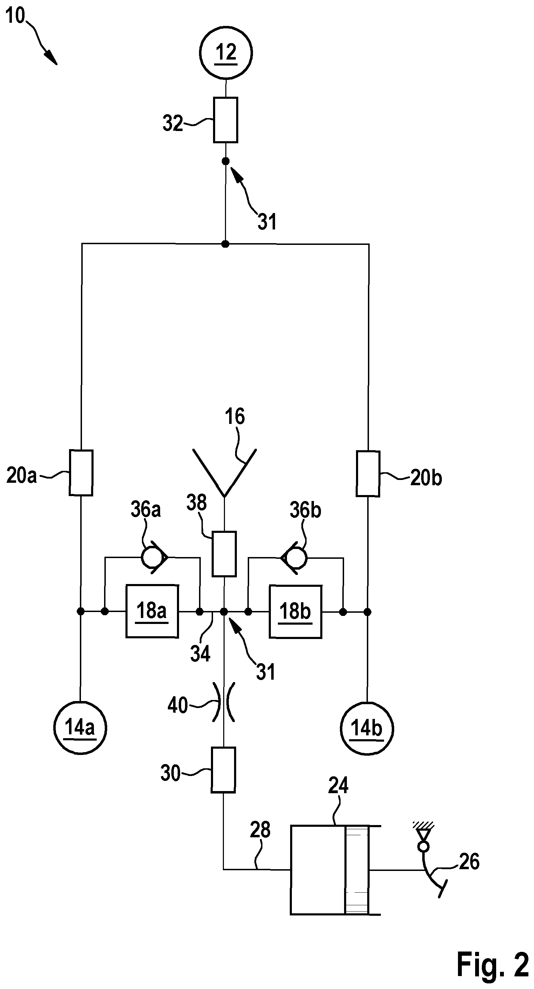

Fig. 2 zeigt eine schematische Teildarstellung einer zweiten Ausführungsform des Bremssystems.

Bei dem Bremssystem der Fig. 2 ist das erste Auslassventil 18a über einen Verbindungsabschnitt 34 mit dem zweiten Auslassventil 18b hydraulisch verbunden. Vorzugsweise ist der Verbindungsabschnitt 34 an das gemeinsame Bremsflüssigkeitsreservoir 16 hydraulisch angebunden. Als Unterschied zu der zuvor beschriebenen Ausführungsform mündet bei der ersten Achseinheit 10 der Fig. 2 die einzige ventillose oder ventilbestückte Verbindungsleitung 28 an dem Verbindungsabschnitt 34. Um einen das Bremsbetätigungselement 26 betätigenden Fahrer in der mechanischen Rückfallebene des Bremssystems ein Einbremsen in den ersten Radbremszylinder 14a und/oder in den zweiten Radbremszylinder 14b der ersten Achseinheit 10 zu ermöglichen, umfasst die erste Achseinheit 10 der Fig. 2 ein parallel zu dem ersten Auslassventil 18a angeordnetes erstes Rückschlagventil 36a und/oder ein parallel zu dem zweiten Auslassventil 18b angeordnetes zweites Rückschlagventil 36b. Das erste Rückschlagventil 36a ist derart ausgerichtet, dass ein Bremsflüssigkeitstransfer in einer Richtung von dem ersten Radbremszylinder 14a zu der Mündung 31 der Verbindungsleitung 28 an dem Verbindungsabschnitt 34 mittels des ersten Rückschlagventils 36a unterbunden ist. Entsprechend wird auch für das zweite Rückschlagventil 36b eine Ausrichtung bevorzugt, bei welcher ein Bremsflüssigkeitstransfer in einer Richtung von dem zweiten Radbremszylinder 14b zu der Mündung 31 der Verbindungsleitung 28 an dem Verbindungsabschnitt 34 mittels des zweiten Rückschlagventil 36b unterbunden ist. Somit kann der Fahrer über das erste Rückschlagventil 36a und/oder das zweite Rückschlagventil 36b auch während der mechanischen Rückfallebene zumindest in einen der Radbremszylinder 14a und 14b der ersten Achseinheit 10 noch einbremsen.

Um eine Beeinträchtigung der auf diese Weise vom Fahrer bewirkten Bremsdrucksteigerung in dem mindestens einen Radbremszylinder 14a und 14b der ersten Achseinheit 10 durch das als "Volumensenke" fungierende Bremsflüssigkeitsreservoir 16 zu verhindern, kann zwischen dem Verbindungsabschnitt 34 und dem Bremsflüssigkeitsreservoir 16 noch ein Reservoir-Abkoppelventil 38 angeordnet sein. Vorzugsweise ist das Reservoir-Abkoppelventil 38 ein stromlos geschlossenes Ventil. Optionaler Weise kann auch noch eine Drossel 40 in die Verbindungsleitung 28 eingesetzt sein.

Bezüglich weiterer Merkmale und Eigenschaften des Bremssystems der Fig. 2 und ihrer Vorteile wird auf die zuvor erläuterte Ausführungsform der Fig. 1 verwiesen.

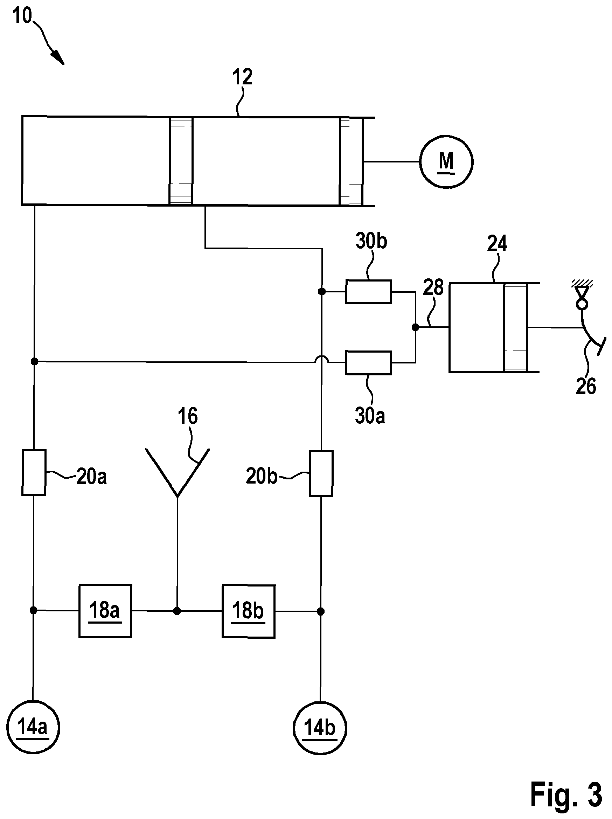

Fig. 3 zeigt eine schematische Teildarstellung einer dritten Ausführungsform des Bremssystems.

Im Unterschied zu den zuvor beschriebenen Ausführungsformen weist die ersten Achseinheit 10 der Fig. 3 als motorisierte Bremsdruckaufbauvorrichtung 12 eine Kolben-Zylinder-Vorrichtung 12 mit mindestens einer Kammer auf. Vorteilhafterweise hat die Kolben-Zylinder-Vorrichtung 12 der Fig. 3 eine erste Kammer und eine zweite Kammer, wobei der erste Radbremszylinder 14a an der ersten Kammer und der zweite Radbremszylinder 14b an der zweiten Kammer angebunden sind.

Bei dem in Fig. 3 schematisch dargestellten Bremssystem unterscheidet sich seine erste Achseinheit 10 von der Ausführungsform der Fig. 1 auch in einer Aufgabelung der einzigen Verbindungsleitung 28 in zwei Teilleitungen derart, dass eine erste Teilleitung der aufgegabelten Verbindungsleitung 28 an einem sich zwischen der ersten Kammer der Kolben-Zylinder-Vorrichtung 12 und dem ersten Trennventil 20a erstreckenden Leitungsabschnitt mündet und eine zweite Teilleitung der aufgegabelten Verbindungsleitung 28 an einem sich zwischen der zweiten Kammer der Kolben-Zylinder-Vorrichtung 12 und dem zweiten Trennventil 20a erstreckenden weiteren Leitungsabschnitt mündet. Außerdem ist ein erstes Hauptbremszylinder-Abkopplungsventil 30a in der ersten Teilleitung der aufgegabelten Verbindungsleitung 28 angeordnet, während ein zweites Hauptbremszylinder-Abkopplungsventil 30b in der zweiten Teilleitung der aufgegabelten Verbindungsleitung 28 liegt.

Bezüglich weiterer Merkmale und Eigenschaften des Bremssystems der Fig. 3 und ihrer Vorteile wird auf die zuvor erläuterte Ausführungsform der Fig. 1 verwiesen.

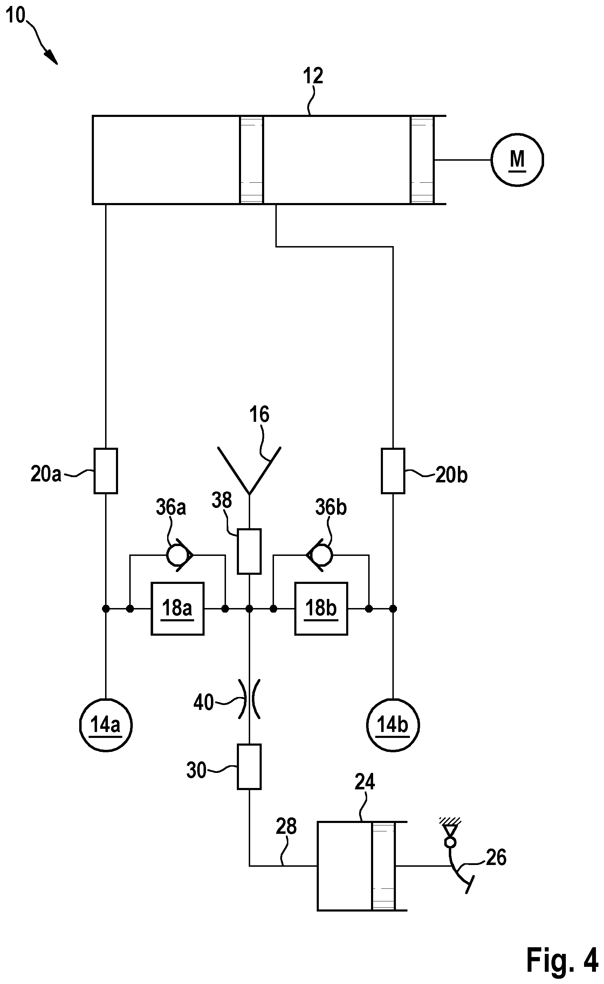

Fig. 4 zeigt eine schematische Teildarstellung einer vierten Ausführungsform des Bremssystems.

Im Unterschied zu der Ausführungsform der Fig.2 weist die erste Achseinheit 10 des Bremssystems der Fig. 4 als motorisierte Bremsdruckaufbauvorrichtung 12 die oben schon erläuterte Kolben-Zylinder-Vorrichtung 12 mit zwei Kammern auf, wobei jedem Radbremszylinder 14a und 14b der ersten Achseinheit 10 eine andere Kammer der Kolben-Zylinder-Vorrichtung 12 zugeordnet ist.

Bezüglich weiterer Merkmale und Eigenschaften des Bremssystems der Fig. 4 und ihrer Vorteile wird deshalb auf die zuvor erläuterten Ausführungsformen der Fig. 1 bis 3 verwiesen.

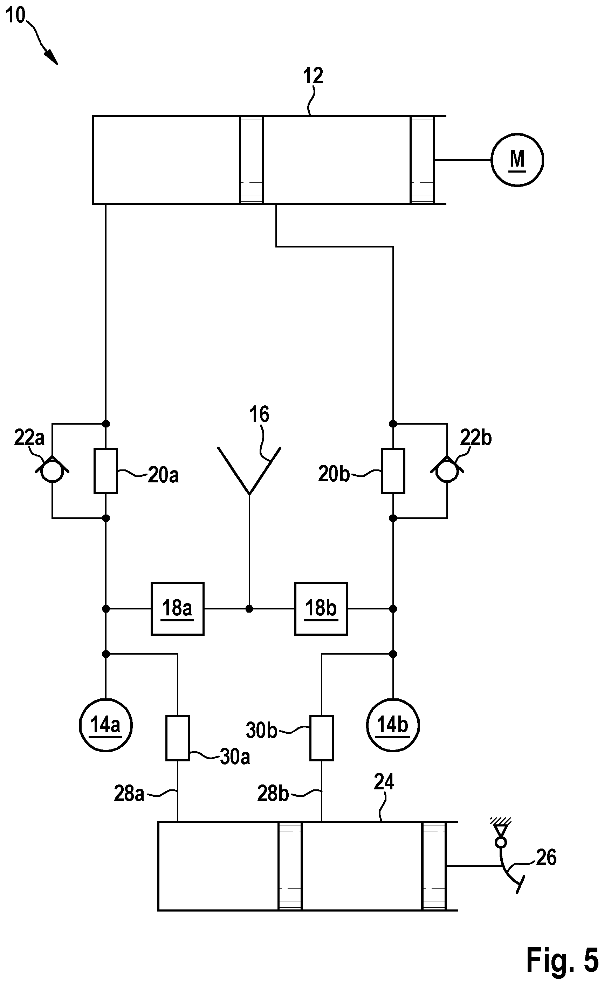

Fig. 5 zeigt eine schematische Teildarstellung einer fünften Ausführungsform des Bremssystems.

Bei dem Bremssystem der Fig. 5 ist der Hauptbremszylinder 24 ein Tandem-Hauptbremszylinder 24. Eine erste Kammer des Hauptbremszylinders 24 ist mittels einer ersten Verbindungsleitung 28a mit dem ersten Hauptbremszylinder-Abkopplungsventil 30a an einem sich zwischen dem ersten Radbremszylinder 14a und dem ersten Trennventil 20a erstreckenden Leitungsabschnitt angebunden. Entsprechend ist eine zweite Kammer des Hauptbremszylinders 24 mittels einer zweiten Verbindungsleitung 28b mit dem zweiten Hauptbremszylinder-Abkopplungsventil 30b an einem sich zwischen dem zweiten Radbremszylinder 14b und dem zweiten Trennventil 20b erstreckenden weiteren Leitungsabschnitt angebunden. Die Trennventile 20a und 20b und evtl. auch die Trennventil-Rückschlagventile 22a und 22b verhindern in diesem Fall in der mechanischen Rückfallebene eine unerwünschte Verschiebung von Bremsflüssigkeit aus dem Hauptbremszylinder 24 in die Kammern der Kolben-Zylinder-Vorrichtung 12. Die mittels der Fahrerbremskraft aus dem Hauptbremszylinder 24 verschobenen Bremsflüssigkeit kann somit (nahezu) vollständig zur Bremsdrucksteigerung in den Radbremszylindern 14a und 14b der ersten Achseinheit 10 genutzt werden.

Bezüglich weiterer Merkmale und Eigenschaften des Bremssystems der Fig. 5 und ihrer Vorteile wird auf die zuvor erläuterten Ausführungsformen der Fig. 1 bis 4 verwiesen.

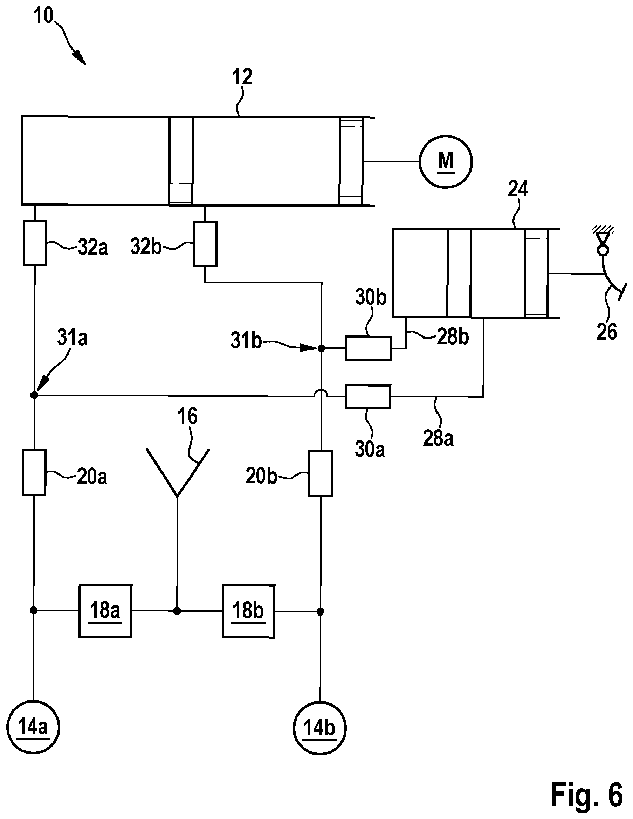

Fig. 6 zeigt eine schematische Teildarstellung einer sechsten Ausführungsform des Bremssystems.

Auch bei dem Bremssystem der Fig. 6 ist der Hauptbremszylinder 24 ein Tandem-Hauptbremszylinder 24. Allerdings ist eine von dem Hauptbremszylinder weg gerichtete erste Mündung 31a der ersten Verbindungsleitung 28a an einem sich zwischen dem ersten Trennventil 20a und der ersten Kammer der Kolben-Zylinder-Vorrichtung 12 erstreckenden Leitungsabschnitt ausgebildet, während eine zweite Mündung 31b der zweiten Verbindungsleitung 28b an einem sich zwischen dem zweiten Trennventil 20b und der zweiten Kammer der Kolben-Zylinder-Vorrichtung 12 erstreckenden weiteren Leitungsabschnitt liegt. Um dennoch in der mechanischen Rückfallebene eine unterwünschte Bremsflüssigkeitsverschiebung aus dem Hauptbremszylinder 24 in die Kammern der Kolben-Zylinder-Vorrichtung 12 zu verhindern, umfasst die erste Achseinheit 10 noch ein zwischen der ersten Mündung 31a der ersten Verbindungsleitung 28a und der ersten Kammer der Kolben-Zylinder-Vorrichtung 12 angeordnetes erstes Abkopplungsventil 32a und ein zwischen der zweiten Mündung 31b der zweiten Verbindungsleitung 28b und der zweiten Kammer der Kolben-Zylinder-Vorrichtung 12 liegendes zweites Abkopplungsventil 32b. Vorzugsweise sind die Abkopplungsventile 32a und 32b je ein stromlos geschlossenes Ventil.

Bezüglich weiterer Merkmale und Eigenschaften des Bremssystems der Fig. 6 und ihrer Vorteile wird auf die zuvor erläuterten Ausführungsformen der Fig. 1 bis 5 verwiesen.

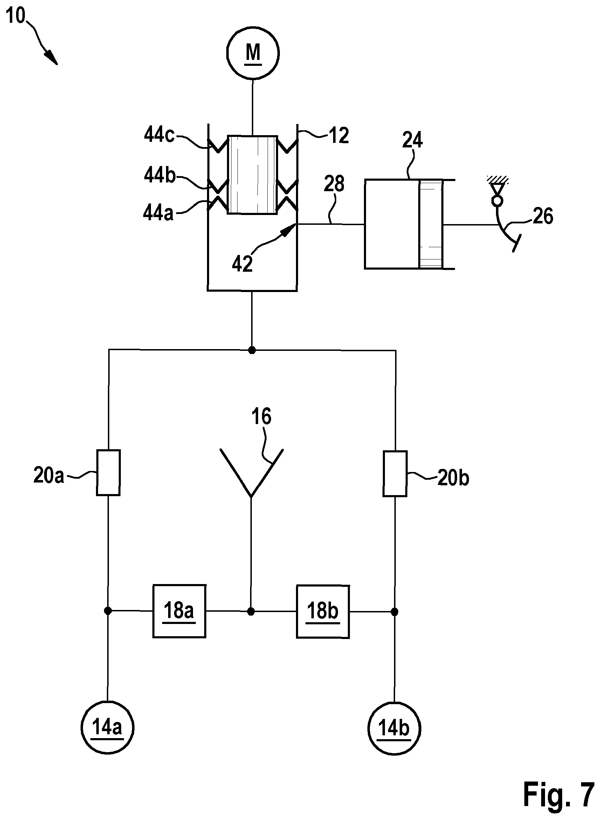

Fig. 7 zeigt eine schematische Teildarstellung einer siebten Ausführungsform des Bremssystems.

Wie in Fig. 7 erkennbar ist, kann der Hauptbremszylinders 24 über die mindestens eine ventillose oder ventilbestückte Verbindungsleitung 28 auch derart an der Kolben-Zylinder-Vorrichtung 12 hydraulisch angebunden sein, dass die mindestens eine Verbindungsleitung 28 jeweils eine von dem Hauptbremszylinder 24 weg gerichtete Verbindungsleitungsmündung 42 an der mindestens einen Kammer der Kolben-Zylinder-Vorrichtung 12 aufweist. Vorzugsweise ist außerdem die mindestens eine Verbindungsleitungsmündung 42 derart ausgebildet, dass, sofern mindestens ein verstellbarer Kolben der Kolben-Zylinder-Vorrichtung 12 in seiner jeweiligen Ausgangsstellung vorliegt, Bremsflüssigkeit aus dem Hauptbremszylinder 24 über die mindestens eine Verbindungsleitung 28 und ihre jeweilige Verbindungsleitungsmündung 42 in die mindestens eine Kammer der Kolben-Zylinder-Vorrichtung 12 transferierbar ist/transferiert wird, während, sofern der mindestens eine verstellbare Kolben aus seiner jeweiligen Ausgangsstellung verstellt ist, ein Bremsflüssigkeitstransfer aus dem Hauptbremszylinder 24 über die mindestens eine Verbindungsleitung 28 und ihre jeweilige Verbindungsleitungsmündung 42 in die mindestens eine Kammer der Kolben-Zylinder-Vorrichtung 12 mittels mindestens eines an dem mindestens einen verstellbaren Kolben der Kolben-Zylinder-Vorrichtung 12 und/oder in der mindestens einen Kammer der Kolben-Zylinder-Vorrichtung 12 befestigten Dichtungselements 44a, 44b und 44c unterbunden ist. Man kann die hier beschriebene vorteilhafte Ausbildung der mindestens einen Verbindungsleitungsmündung 42 deshalb auch als eine Ausbildung der mindestens einen Verbindungsleitungsmündung 42 "als Schnüffelbohrung" umschreiben.

Die mindestens eine vorteilhaft Verbindungsleitungsmündung 42 und das mindestens eine Dichtungselement 44a, 44b und 44c stellen somit sicher, dass bei einem Betrieb der in ihrem funktionsfähigen Zustand vorliegenden Kolben-Zylinder-Vorrichtung 12 der Hauptbremszylinder 24 "automatisch" von der Kolben-Zylinder-Vorrichtung 12 entkoppelt ist, und deshalb die auf das Bremsbetätigungselement 26 aufgebrachte Fahrerbremskraft keinen Einfluss auf den in den Radbremszylindern 14a und 14b jeweils vorliegenden Bremsdruck hat. Bei einem Ausfall der Kolben-Zylinder-Vorrichtung 12 und/oder des Fahrzeugbordnetzes des Fahrzeugs liegt der mindestens eine verstellbare Kolben der Kolben-Zylinder-Vorrichtung 12 in der Regel in seiner jeweiligen Ausgangsstellung vor, wodurch das Bremssystem "automatisch" in seine mechanische Rückfallebene überführt ist, in welcher der Fahrer mittels seiner Fahrerbremskraft noch verlässlich eine zum Abbremsen seines Fahrzeugs ausreichende Bremsdrucksteigerung in den Radbremszylindern 14a und 14b bewirkten kann. Eine Ausstattung des Bremssystems der Fig. 7 mit einem Hauptbremszylinder-Abkopplungsventil 32, 32a oder 32b ist deshalb überflüssig.

Bei der ersten Achseinheit 10 der Fig. 7 ist die einzige Kammer des Hauptbremszylinders 24 über die einzige Verbindungsleitung 28 mit der einzigen Kammer der Kolben-Zylinder-Vorrichtung 12 verbunden. Beispielhaft trägt der einzige Kolben der Kolben-Zylinder-Vorrichtung 12 drei daran befestigte Dichtungselemente 44a, 44b und 44c. Ein bei einem Vorliegen des Kolbens der Kolben-Zylinder-Vorrichtung 12 in seiner Ausgangsstellung der Verbindungsleitungsmündung 42 am nächsten liegendes erstes Dichtungselement 44a ist für einen Druck aus der Richtung der Verbindungsleitungsmündung 42 sperrend und für einen Druck aus der (entgegengesetzten) Richtung des Motors durchlässig. Ein zu dem ersten Dichtungselement 44a benachbartes zweites Dichtungselement 44b ist für einen Druck aus der Richtung des ersten Dichtungselements 44a durchlässig und für einen Druck aus der (entgegengesetzten) Richtung des Motors sperrend. Zusätzlich ist ein dem Motor der Kolben-Zylinder-Vorrichtung 12 am nächsten liegendes drittes Dichtungselement 44c für einen Druck aus der Richtung des ersten Dichtungselement 44a und des zweiten Dichtungselement 44b durchlässig und für einen Druck aus der (entgegengesetzten) Richtung des Motors sperrend.

Bezüglich weiterer Merkmale und Eigenschaften des Bremssystems der Fig. 7 und ihrer Vorteile wird auf die zuvor erläuterten Ausführungsformen der Fig. 1 bis 6 verwiesen.

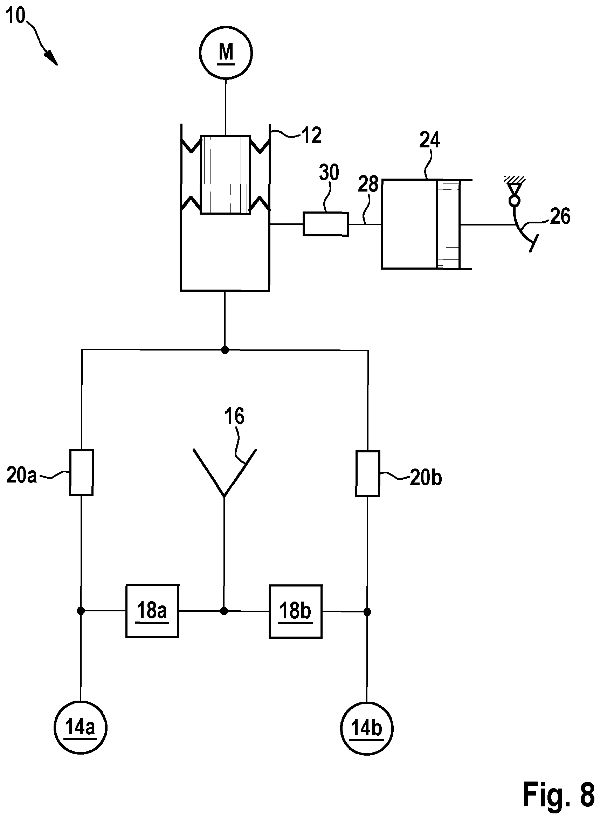

Fig. 8 zeigt eine schematische Teildarstellung einer achten Ausführungsform des Bremssystems.

Im Unterschied zur Ausführungsform der Fig. 7 ist bei der ersten Achseinheit 10 der Fig. 8 das Hauptbremszylinder-Abkopplungsventil 30 in die einzige Verbindungsleitung 28 eingesetzt. Auf die Ausbildung der mindestens einen Verbindungsleitungsmündung 42 "als Schnüffelbohrung" und die Verwendung bestimmter Dichtungselementtypen kann somit bei der ersten Achseinheit 10 der Fig. 8 verzichtet werden.

Bezüglich weiterer Merkmale und Eigenschaften des Bremssystems der Fig. 8 und ihrer Vorteile wird auf die zuvor erläuterten Ausführungsformen der Fig. 1 bis 7 verwiesen.

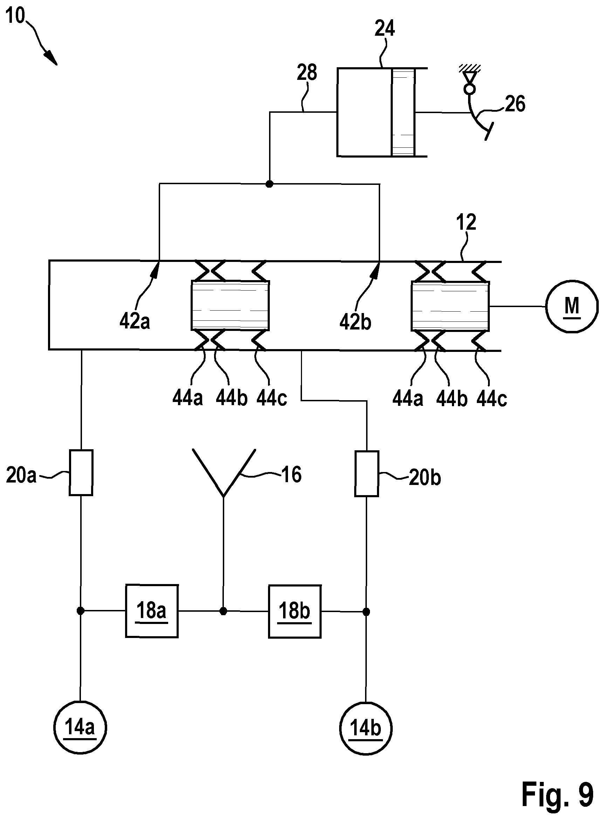

Fig. 9 zeigt eine schematische Teildarstellung einer neunten Ausführungsform des Bremssystems.

Bei dem in Fig. 9 schematisch dargestellten Bremssystem unterscheidet sich seine erste Achseinheit 10 von der Ausführungsform der Fig. 7 in der Verwendung der Kolben-Zylinder-Vorrichtung 12 mit zwei Kammern auf, wobei jedem Radbremszylinder 14a und 14b der ersten Achseinheit 10 eine andere Kammer der Kolben-Zylinder-Vorrichtung 12 zugeordnet ist, und in der Aufgabelung der einzigen Verbindungsleitung 28 in zwei Teilleitungen. Die erste Teilleitung der aufgegabelten Verbindungsleitung 28 hat eine erste Verbindungsleitungsmündung 42a an der ersten Kammer der Kolben-Zylinder-Vorrichtung 12, während die zweite Teilleitung der aufgegabelten Verbindungsleitung 28 mit einer zweiten Verbindungsleitungsmündung 42b an der zweiten Kammer der Kolben-Zylinder-Vorrichtung 12 ausgebildet ist. Aufgrund der Ausbildung jeder Verbindungsleitungsmündung 42a und 42b "als Schnüffelbohrung" ist gewährleistet, dass, sofern der benachbarte Kolben der Kolben-Zylinder-Vorrichtung 12 in seiner jeweiligen Ausgangsstellung vorliegt, Bremsflüssigkeit aus dem Hauptbremszylinder 24 in die jeweilige Kammer der Kolben-Zylinder-Vorrichtung 12 transferierbar ist, während bei Verstellung des benachbarten Kolbens aus seiner jeweiligen Ausgangsstellung die jeweilige Verbindungsleitungsmündung 42a oder 42b mittels des mindestens einen Dichtungselements 44a, 44b und 44c abgedichtet ist. Dazu ist jeder Kolben der Kolben-Zylinder-Vorrichtung 12 jeweils mit den oben schon erläuterten Dichtungselementen 44a, 44b und 44c bestückt.

Bezüglich weiterer Merkmale und Eigenschaften des Bremssystems der Fig. 9 und ihrer Vorteile wird auf die zuvor erläuterten Ausführungsformen der Fig. 1 bis 7 verwiesen.

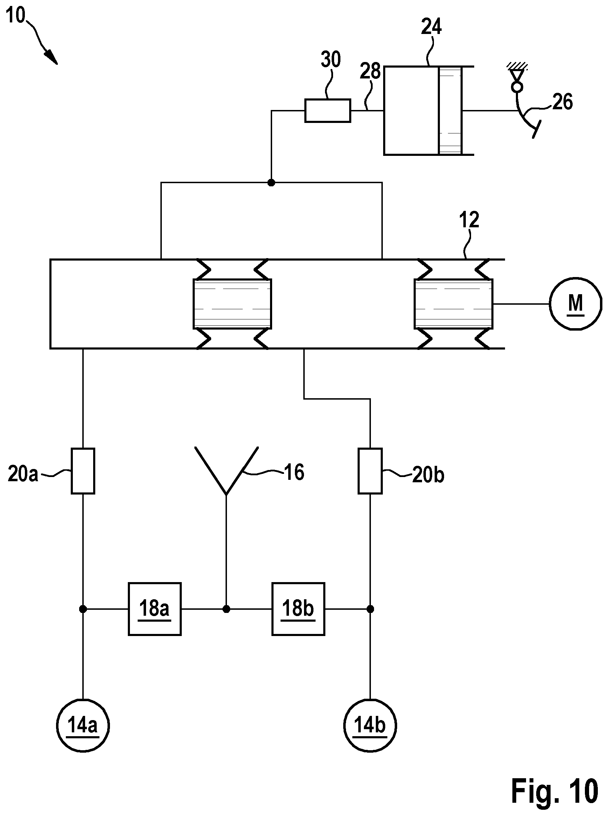

Fig. 10 zeigt eine schematische Teildarstellung einer zehnten Ausführungsform des Bremssystems.

Im Unterschied zur Ausführungsform der Fig. 9 weist die erste Achseinheit 10 der Fig. 10 das Hauptbremszylinder-Abkopplungsventil 30 in seiner einzigen Verbindungsleitung 28 auf. Bevorzugter Weise ist das einzige Hauptbremszylinder-Abkopplungsventil 30 in der Verbindungsleitung 28 zwischen dem Hauptbremszylinder 24 und der Aufgabelung der Verbindungsleitung angeordnet. Auf die Ausbildung der Verbindungsleitungsmündungen 42a und 42b "als Schnüffelbohrungen" und die Verwendung bestimmter Dichtungselementtypen kann somit bei der ersten Achseinheit 10 der Fig. 10 verzichtet werden.

Bezüglich weiterer Merkmale und Eigenschaften des Bremssystems der Fig. 10 und ihrer Vorteile wird auf die zuvor erläuterten Ausführungsformen der Fig. 1 bis 9 verwiesen.

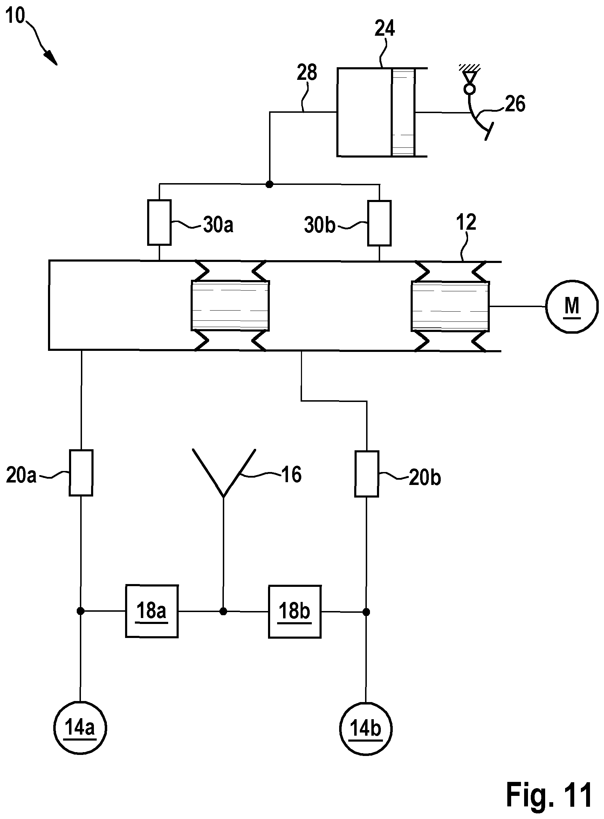

Fig. 11 zeigt eine schematische Teildarstellung einer elften Ausführungsform des Bremssystems.

Anstelle des einzigen Hauptbremszylinder-Abkopplungsventils 30 umfasst die erste Achseinheit 10 der Fig. 11 das in der ersten Teilleitung der aufgegabelten Verbindungsleitung 28 angeordnete erste Hauptbremszylinder-Abkopplungsventil 30a und das in der zweiten Teilleitung der aufgegabelten Verbindungsleitung 28 liegende zweite Hauptbremszylinder-Abkopplungsventil 30b. Auch bei der ersten Achseinheit 10 der Fig. 10 kann damit auf die Ausbildung der Verbindungsleitungsmündungen 42a und 42b "als Schnüffelbohrungen" und die Verwendung bestimmter Dichtungselementtypen verzichtet werden.

Bezüglich weiterer Merkmale und Eigenschaften des Bremssystems der Fig. 11 und ihrer Vorteile wird auf die zuvor erläuterten Ausführungsformen der Fig. 1 bis 10 verwiesen.

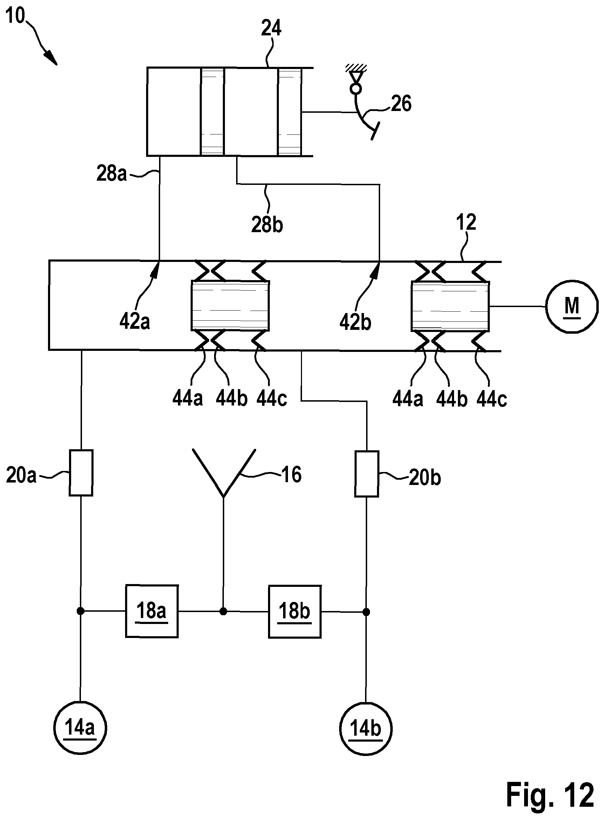

Fig. 12 zeigt eine schematische Teildarstellung einer zwölften Ausführungsform des Bremssystems.

Auch bei dem Bremssystem der Fig. 12 ist der Hauptbremszylinder 24 ein Tandem-Hauptbremszylinder 24, dessen erste Kammer über die erste Verbindungsleitung 28a und die erste Verbindungsleitungsmündung 42a mit der ersten Kammer der Kolben-Zylinder-Vorrichtung 12 und dessen zweite Kammer über die zweite Verbindungsleitung 28b und die zweite Verbindungsleitungsmündung 42b mit der zweiten Kammer der Kolben-Zylinder-Vorrichtung 12 verbunden sind. Auch bei dem Bremssystem der Fig. 12 ist jede Verbindungsleitungsmündung 42a und 42b "als Schnüffelbohrung" derart ausgebildet, dass, sofern der benachbarte Kolben der Kolben-Zylinder-Vorrichtung 12 in seiner jeweiligen Ausgangsstellung vorliegt, Bremsflüssigkeit aus dem Hauptbremszylinder 24 in die jeweilige Kammer der Kolben-Zylinder-Vorrichtung 12 transferierbar ist, während bei Verstellung des benachbarten Kolbens aus seiner jeweiligen Ausgangsstellung die jeweilige Verbindungsleitungsmündung 42a oder 42b mittels des mindestens einen Dichtungselements 44a, 44b und 44c abgedichtet ist. Zusätzlich ist jeder Kolben der Kolben-Zylinder-Vorrichtung 12 jeweils mit den oben schon erläuterten Dichtungselementen 44a, 44b und 44c bestückt.

Bezüglich weiterer Merkmale und Eigenschaften des Bremssystems der Fig. 12 und ihrer Vorteile wird auf die zuvor erläuterten Ausführungsformen der Fig. 1 bis 11 verwiesen.

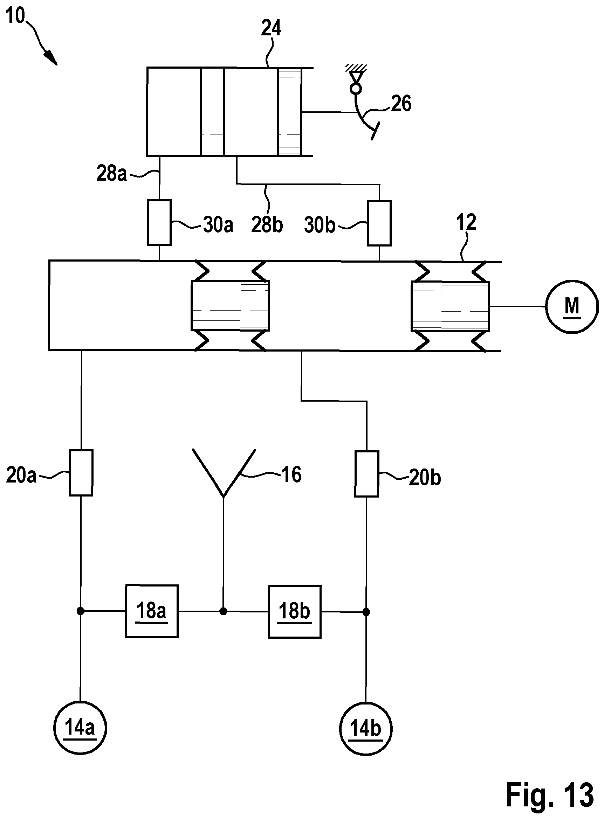

Fig. 13 zeigt eine schematische Teildarstellung einer dreizehnten Ausführungsform des Bremssystems.

Im Unterschied zur Ausführungsform der Fig. 12 weist die erste Achseinheit 10 der Fig. 13 je ein Hauptbremszylinder-Abkopplungsventil 30a oder 30b ist jeder Verbindungsleitung 28a und 28b auf. Darum kann auch bei der ersten Achseinheit 10 der Fig. 13 auf die Ausbildung der Verbindungsleitungsmündungen 42a und 42b "als Schnüffelbohrungen" und die Verwendung bestimmter Dichtungselementtypen verzichtet werden.

Bezüglich weiterer Merkmale und Eigenschaften des Bremssystems der Fig. 13 und ihrer Vorteile wird auf die zuvor erläuterten Ausführungsformen der Fig. 1 bis 12 verwiesen.

Bei den oben beschriebenen Ausführungsformen der Fig. 1,2,7 und 8 hat die erste Achseinheit nur einen Bremskreis, welcher zumindest den ersten Radbremszylinder 14a, das erste Auslassventil 18a, den zweiten Radbremszylinder 14b und das zweite Auslassventil 18b umfasst, wobei die motorisierte Bremsdruckaufbauvorrichtung 12 in den Bremskreis integriert oder an dem Bremskreis hydraulisch angebunden ist. Die erste Achseinheit 10 ist bei den Ausführungsformen der Fig. 1,2,7 und 8 somit eine einkreisige Achseinheit 10. Demgegenüber weisen die oben erläuterten Ausführungsformen der Fig. 3 bis 6 und 9 bis 13 einen ersten Bremskreis der ersten Achseinheit 10 mit zumindest den ersten Radbremszylinder 14a und dem ersten Auslassventil 18a und einen zweiten Bremskreis der ersten Achseinheit 10 mit zumindest dem zweiten Radbremszylinder 14b und dem zweite Auslassventil 18b auf, wobei der erste Bremskreis an einer ersten Kammer der Kolben-Zylinder-Vorrichtung 12 und der zweite Bremskreis an einer zweiten Kammer der Kolben-Zylinder-Vorrichtung 12 hydraulisch angebunden sind. Wahlweise kann die erste Achseinheit 10 somit auch zweikreisig ausgebildet sein.

Optionaler Weise kann bei jeder der oben beschriebenen Ausführungsformen die erste Achseinheit 10 noch eine Steuervorrichtung haben, welche dazu ausgelegt und/oder programmiert ist, unter Berücksichtigung mindestens eines Bremsvorgabesignals zumindest die motorisierte Bremsdruckaufbauvorrichtung 12, das erste Auslassventil 18a und das zweite Auslassventil 18b, sowie evtl. auch das mindestens eine weitere Ventil 20a, 20b, 30, 30a, 30b, 32, 32a und 32b der ersten Achseinheit 10, mittels mindestens eines Steuersignals anzusteuern. Das mindestens eine Bremsvorgabesignal kann von mindestens einem Bremsbetätigungselement-Sensor des Fahrzeugs, einer Geschwindigkeitssteuerautomatik des Fahrzeugs, einer weiteren Steuervorrichtung der zweiten Achseinheit und/oder einer weiteren Stabilisiervorrichtung des Bremssystems an die Steuervorrichtung ausgegeben sein. Der mindestens eine Bremsbetätigungselement-Sensor kann beispielsweise ein Stangenwegsensor und/oder ein Differenzwegsensor sein. Die Geschwindigkeitssteuerautomatik kann z.B. eine Automatik zum fahrerlosen Fahren des Fahrzeugs, ein Abstandsregeltempomat und/oder ein Notbremssystem sein. Unter der weiteren Stabilisierungsvorrichtung des Fahrzeugs kann insbesondere eine ESP- oder eine ABS-Regelungseinheit verstanden werden. Die erste Achseinheit 10 kann somit mit einer Vielzahl verschiedener Elektronikkomponenten zur Druckstellung in den Radbremszylindern 14a und 14b zusammenwirken.

Als vorteilhafte Weiterbildung kann die Steuervorrichtung auch dazu ausgebildet sein, Sensorsignale eines (nicht dargestellten) Vordrucksensors der ersten Achseinheit 10, mindestens eines (nicht skizzierten) Raddrucksensors der ersten Achseinheit 10, mindestens eines (nicht bildlich wiedergegebenen) Raddrehzahlsensors, eines Gierratensensors und/oder eines Beschleunigungssensors mindestens eines der Räder der ersten Achse des Fahrzeugs zu empfangen und auszuwerten. Ebenso kann die Steuervorrichtung auch dazu ausgelegt sein, mindestens einen zum rekuperativen Abbremsen des Fahrzeugs generatorisch eingesetzten (nicht bildlich dargestellten) Motor des Fahrzeugs mitanzusteuern, bzw. dem Motor die zum rekuperativen Abbremsen des Fahrzeugs vorteilhaften Information mitzuteilen.

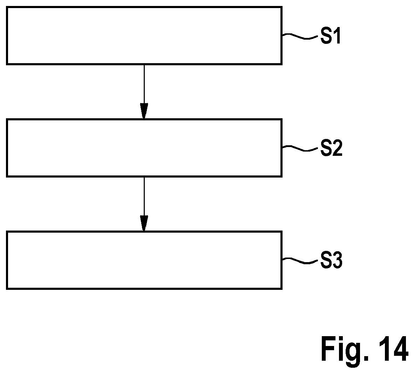

Fig. 14 zeigt ein Flussdiagramm zum Erläutern einer Ausführungsform des Verfahrens zum Abbremsen eines zumindest zweiachsigen Fahrzeugs.

Das im Weiteren beschriebene Verfahren kann beispielsweise mittels eines der oben erläuterten Bremssysteme ausgeführt werden. Eine Ausführbarkeit des Verfahrens ist jedoch nicht auf die Verwendung eines dieser Bremssysteme limitiert. Eine Ausführbarkeit des Verfahrens ist auch nicht auf einen speziellen Fahrzeugtyp/Kraftfahrzeugtyp des zweiachsigen Fahrzeugs/Kraftfahrzeugs beschränkt.

In einem Verfahrensschritt S1 werden ein erstes Rad einer ersten Achse des Fahrzeugs und ein zweites Rad der ersten Achse abgebremst, indem mittels eines Betriebs mindestens einer motorisierten Bremsdruckaufbauvorrichtung einer an der ersten Achse montierten ersten Achseinheit Bremsflüssigkeit aus einem angebundenen Bremsflüssigkeitsreservoir in einen dem ersten Rad der ersten Achse zugeordneten ersten Radbremszylinder und in einen dem zweiten Rad der ersten Achse zugeordneten zweiten Radbremszylinder transferiert wird. Gleichzeitig mit dem Verfahrensschritt S1 kann auch ein Verfahrensschritt S2 ausgeführt werden, in welchem ein erstes Rad einer zweiten Achse des Fahrzeugs und ein zweites Rad der zweiten Achse mittels eines Betriebs einer an der zweiten Achse montierten und hydraulisch von der ersten Achseinheit getrennt ausgebildeten zweiten Achseinheit abgebremst werden. Außerdem umfasst das Verfahren auch einen Verfahrensschritt S3, wobei Bremsflüssigkeit aus dem ersten Radbremszylinder über ein erstes Auslassventil in das angebundene Bremsflüssigkeitsreservoir und aus dem zweiten Radbremszylinder über ein zweites Auslassventil in das angebundene Bremsflüssigkeitsreservoir abgelassen wird. Damit schafft auch ein Ausführen des hier beschriebenen Verfahrens die oben erläuterten Vorteile.

## Patentansprüche

1. Bremssystem für ein zumindest zweiachsiges Fahrzeug mit:
einer an einer ersten Achse des Fahrzeugs montierbaren ersten Achseinheit (10) mit einer motorisierten Bremsdruckaufbauvorrichtung (12), einem ersten Radbremszylinder (14a) und einem zweiten Radbremszylinder (14b), wobei mittels eines Betriebs der motorisierten Bremsdruckaufbauvorrichtung (12) Bremsflüssigkeit aus einem angebundenen Bremsflüssigkeitsreservoir (16) in den ersten Radbremszylinder (14a) und in den zweiten Radbremszylinder (14b) transferierbar ist, so dass ein dem ersten Radbremszylinder (14a) zugeordnetes erstes Rad der ersten Achse und ein dem zweiten Radbremszylinder (14b) zugeordnetes zweites Rad der ersten Achse abbremsbar sind; und
einer an einer zweiten Achse des Fahrzeugs montierbaren und hydraulisch von der ersten Achseinheit (10) getrennt ausgebildeten zweiten Achseinheit, so dass mittels eines Betriebs der zweiten Achseinheit ein erstes Rad der zweiten Achse und ein zweites Rad der zweiten Achse abbremsbar sind, wobei die erste Achseinheit (10) derart hydraulisch von der zweiten Achseinheit getrennt ausgebildet ist, dass die erste Achseinheit (10) und die zweite Achseinheit höchstens über mindestens eine Signal- und/oder Busleitung miteinander verbunden sind und die erste Achseinheit (10) und die zweite Achseinheit als zwei getrennte Einheiten an dem damit zu bestückenden zweiachsigen Fahrzeug montierbar sind;
**dadurch gekennzeichnet, dass**
die erste Achseinheit (10) ein dem ersten Radbremszylinder (14a) zugeordnetes erstes Auslassventil (18a) und ein dem zweiten Radbremszylinder (14b) zugeordnetes zweites Auslassventil (18b) umfasst, und Bremsflüssigkeit aus dem ersten Radbremszylinder (14a) über das erste Auslassventil (18a) und aus dem zweiten Radbremszylinder (14b) über das zweite Auslassventil (18b) in das angebundene Bremsflüssigkeitsreservoir (16) ablassbar ist.

2. Bremssystem nach Anspruch 1, wobei ein Bremskreis der ersten Achseinheit (10) zumindest den ersten Radbremszylinder (14a), das erste Auslassventil (18a), den zweiten Radbremszylinder (14b) und das zweite Auslassventil (18b) umfasst, und wobei die motorisierte Bremsdruckaufbauvorrichtung (12) in den Bremskreis integriert oder an dem Bremskreis hydraulisch angebunden ist.

3. Bremssystem nach Anspruch 1, wobei ein erster Bremskreis der ersten Achseinheit (10) zumindest den ersten Radbremszylinder (14a) und das erste Auslassventil (18a) umfasst und ein zweiter Bremskreis der ersten Achseinheit zumindest den zweiten Radbremszylinder (14b) und das zweite Auslassventil (18b) umfasst, und wobei der erste Bremskreis an einer ersten Kammer der als Kolben-Zylinder-Vorrichtung (12) ausgebildeten motorisierten Bremsdruckaufbauvorrichtung (12) hydraulisch angebunden ist und der zweite Bremskreis an einer zweiten Kammer der Kolben-Zylinder-Vorrichtung (12) hydraulisch angebunden ist.

4. Bremssystem nach einem der vorhergehenden Ansprüche, wobei die erste Achseinheit (10) zusätzlich einen Hauptbremszylinder (24) umfasst, an welchem ein Bremsbetätigungselement (26) des Fahrzeugs derart anbindbar oder angebunden ist, dass mindestens ein mindestens eine Kammer des Hauptbremszylinders (24) begrenzender Kolben des Hauptbremszylinders (24) mittels einer Betätigung des Bremsbetätigungselements (26) durch einen Fahrer des Fahrzeugs verstellbar ist, und Bremsflüssigkeit aus der mindestens einen Kammer des Hauptbremszylinders (24) zumindest über mindestens eine ventillose oder ventilbestückte Verbindungsleitung (28, 28a, 28b) in den ersten Radbremszylinder (14a) und/oder in den zweiten Radbremszylinder (14b) transferierbar ist.

5. Bremssystem nach Anspruch 4, wobei das erste Auslassventil (18a) über einen Verbindungsabschnitt (34) mit dem zweiten Auslassventil (18b) hydraulisch verbunden ist und die einzige ventillose oder ventilbestückte Verbindungsleitung (28) an dem Verbindungsabschnitt (34) mündet, und wobei ein parallel zu dem ersten Auslassventil (18a) angeordnetes erstes Rückschlagventil (36a) derart ausgerichtet ist, dass ein Bremsflüssigkeitstransfer in einer Richtung von dem ersten Radbremszylinder (14a) zu einer Mündung (31) der Verbindungsleitung (28) an dem Verbindungsabschnitt (34) mittels des ersten Rückschlagventils (36a) unterbunden ist, und/oder ein parallel zu dem zweiten Auslassventil (18b) angeordnetes zweites Rückschlagventil (36b) derart ausgerichtet ist, dass ein Bremsflüssigkeitstransfer in einer Richtung von dem zweiten Radbremszylinder (14b) zu der Mündung (31) der Verbindungsleitung (28) an dem Verbindungsabschnitt (34) mittels des zweiten Rückschlagventils (36b) unterbunden ist.

6. Bremssystem nach Anspruch 4, wobei die motorisierte Bremsdruckaufbauvorrichtung (12) eine Kolben-Zylinder-Vorrichtung (12) mit mindestens einer Kammer ist und der Hauptbremszylinders (24) über die mindestens eine ventillose oder ventilbestückte Verbindungsleitung (28, 28a, 28b) derart an der Kolben-Zylinder-Vorrichtung (12) hydraulisch angebunden ist, dass die mindestens eine Verbindungsleitung (28, 28a, 28b) jeweils eine Verbindungsleitungsmündung (42, 42a, 42b) an der mindestens einen Kammer der Kolben-Zylinder-Vorrichtung (12) aufweist, und wobei die mindestens eine Verbindungsleitungsmündung (42, 42a, 42b) derart ausgebildet ist, dass, sofern mindestens ein verstellbarer Kolben der Kolben-Zylinder-Vorrichtung (12) in seiner jeweiligen Ausgangsstellung vorliegt, Bremsflüssigkeit aus dem Hauptbremszylinder (24) über die mindestens eine Verbindungsleitung (28, 28a, 28b) und ihre jeweilige Verbindungsleitungsmündung (42, 42a, 42b) in die mindestens eine Kammer der Kolben-Zylinder-Vorrichtung (12) transferierbar ist, während, sofern der mindestens eine verstellbare Kolben aus seiner jeweiligen Ausgangsstellung verstellt ist, ein Bremsflüssigkeitstransfer aus dem Hauptbremszylinder (24) über die mindestens eine Verbindungsleitung (28, 28a, 28b) und ihre jeweilige Verbindungsleitungsmündung (42, 42a, 42b) in die mindestens eine Kammer der Kolben-Zylinder-Vorrichtung (12) mittels mindestens eines an dem mindestens einen verstellbaren Kolben der Kolben-Zylinder-Vorrichtung (12) und/oder in der mindestens einen Kammer der Kolben-Zylinder-Vorrichtung (12) befestigten Dichtungselements (44a, 44b, 44c) unterbunden ist.

7. Bremssystem nach einem der vorhergehenden Ansprüche, wobei der erste Radbremszylinder (14a) über ein erstes Trennventil (20a) mit der motorisierten Bremsdruckaufbauvorrichtung (12) hydraulisch verbunden ist und/oder der zweite Radbremszylinder (14b) über ein zweites Trennventil (20b) mit der motorisierten Bremsdruckaufbauvorrichtung (12) hydraulisch verbunden ist.

8. Bremssystem nach Anspruch 7, wobei ein parallel zu dem ersten Trennventil (20a) angeordnetes drittes Rückschlagventil (22a) derart ausgerichtet ist, dass ein Bremsflüssigkeitstransfer in einer Richtung von dem ersten Radbremszylinder (14a) zu der motorisierten Bremsdruckaufbauvorrichtung (12) mittels des dritten Rückschlagventils (22a) unterbunden ist, und/oder ein parallel zu dem zweiten Trennventil (20b) angeordnetes viertes Rückschlagventil (22b) derart ausgerichtet ist, dass ein Bremsflüssigkeitstransfer in einer Richtung von dem zweiten Radbremszylinder (14b) zu der motorisierten Bremsdruckaufbauvorrichtung (12) mittels des vierten Rückschlagventils (22b) unterbunden ist.

9. Verfahren zum Abbremsen eines zumindest zweiachsigen Fahrzeugs mit den Schritten:
Abbremsen eines ersten Rads einer ersten Achse des Fahrzeugs und eines zweiten Rads der ersten Achse, indem mittels eines Betriebs mindestens einer motorisierten Bremsdruckaufbauvorrichtung (12) einer an der ersten Achse montierten ersten Achseinheit (10) Bremsflüssigkeit aus einem angebundenen Bremsflüssigkeitsreservoir (16) in einen dem ersten Rad der ersten Achse zugeordneten ersten Radbremszylinder (14a) und in einen dem zweiten Rad der ersten Achse zugeordneten zweiten Radbremszylinder (14b) transferiert wird (S1); und
Abbremsen eines ersten Rads einer zweiten Achse des Fahrzeugs und eines zweiten Rads der zweiten Achse mittels eines Betriebs einer an der zweiten Achse montierten und hydraulisch von der ersten Achseinheit (10) getrennt ausgebildeten zweiten Achseinheit (S2), wobei die erste Achseinheit (10) derart hydraulisch von der zweiten Achseinheit getrennt ausgebildet ist, dass die erste Achseinheit (10) und die zweite Achseinheit höchstens über mindestens eine Signal- und/oder Busleitung miteinander verbunden sind und die erste Achseinheit (10) und die zweite Achseinheit als zwei getrennte Einheiten an dem damit bestückten zweiachsigen Fahrzeug montierbar sind;
**dadurch gekennzeichnet, dass**
Bremsflüssigkeit aus dem ersten Radbremszylinder (14a) über ein erstes Auslassventil (18a) in das angebundene Bremsflüssigkeitsreservoir (16) und aus dem zweiten Radbremszylinder (14b) über ein zweites Auslassventil (18b) in das angebundene Bremsflüssigkeitsreservoir (16) abgelassen wird (S3).

## Claims

1. Brake system for an at least two-axle vehicle with:
a first axle unit (10), which can be mounted on a first axle of the vehicle, comprising a motorized brake pressure generation device (12), a first wheel brake cylinder (14a) and a second wheel brake cylinder (14b), wherein, by means of operation of the motorized brake pressure generation device (12), brake fluid can be transferred from an attached brake fluid reservoir (16) into the first wheel brake cylinder (14a) and into the second wheel brake cylinder (14b), such that a first wheel, assigned to the first wheel brake cylinder (14a), of the first axle and a second wheel, assigned to the second wheel brake cylinder (14b), of the first axle can be braked; and
a second axle unit which can be mounted on a second axle of the vehicle and which is of hydraulically separate design from the first axle unit (10), such that, by means of operation of the second axle unit, a first wheel of the second axle and a second wheel of the second axle can be braked, wherein the first axle unit (10) is of hydraulically separate design from the second axle unit in such a way that the first axle unit (10) and the second axle unit are connected to each other at most via at least one signal and/or bus line, and the first axle unit (10) and the second axle unit can be mounted as two separate units on the two-axle vehicle to be fitted therewith;
**characterized in that**
the first axle unit (10) comprises a first outlet valve (18a) assigned to the first wheel brake cylinder (14a) and a second outlet valve (18b) assigned to the second wheel brake cylinder (14b), and brake fluid can be drained from the first wheel brake cylinder (14a) via the first outlet valve (18a) and from the second wheel brake cylinder (14b) via the second outlet valve (18b) into the attached brake fluid reservoir (16).

2. Brake system according to Claim 1, wherein a brake circuit of the first axle unit (10) comprises at least the first wheel brake cylinder (14a), the first outlet valve (18a), the second wheel brake cylinder (14b) and the second outlet valve (18b), and wherein the motorized brake pressure generation device (12) is integrated into the brake circuit or hydraulically connected to the brake circuit.

3. Brake system according to Claim 1, wherein a first brake circuit of the first axle unit (10) comprises at least the first wheel brake cylinder (14a) and the first outlet valve (18a), and a second brake circuit of the first axle unit comprises at least the second wheel brake cylinder (14b) and the second outlet valve (18b), and wherein the first brake circuit is hydraulically connected to a first chamber of the motorized brake pressure generation device (12) designed as a piston-cylinder device (12), and the second brake circuit is hydraulically connected to a second chamber of the piston-cylinder device (12).

4. Brake system according to any one of the preceding claims, wherein the first axle unit (10) additionally comprises a brake master cylinder (24), to which a brake actuating element (26) of the vehicle is connectable or connected in such a way that at least one piston of the brake master cylinder (24) delimiting at least one chamber of the brake master cylinder (24) can be adjusted by means of actuation of the brake actuating element (26) by a driver of the vehicle, and brake fluid from which at least one chamber of the brake master cylinder (24) can be transferred into the first wheel brake cylinder (14a) and/or into the second wheel brake cylinder (14b) at least via at least one valve-free or valve-equipped connecting line (28, 28a, 28b).

5. Brake system according to Claim 4, wherein the first outlet valve (18a) is hydraulically connected via a connecting section (34) to the second outlet valve (18b), and the single valve-free or valve-equipped connecting line (28) opens at the connecting section (34), and wherein a first check valve (36a) arranged parallel to the first outlet valve (18a) is oriented in such a way that a brake fluid transfer is prevented in a direction from the first wheel brake cylinder (14a) to an orifice (31) of the connecting line (28) on the connecting section (34) by means of the first check valve (36a), and/or a second check valve (36b) arranged parallel to the second outlet valve (18b) is oriented in such a way that a brake fluid transfer is prevented in a direction from the second wheel brake cylinder (14b) to the orifice (31) of the connecting line (28) on the connecting section (34) by means of the second check valve (36b).

6. Brake system according to Claim 4, wherein the motorized brake pressure generation device (12) is a piston-cylinder device (12) with at least one chamber, and the brake master cylinder (24) is hydraulically connected to the piston-cylinder device (12) via the at least one valve-free or valve-equipped connecting line (28, 28a, 28b) in such a way that the at least one connecting line (28, 28a, 28b) in each case has a connecting line orifice (42, 42a, 42b) on the at least one chamber of the piston-cylinder device (12), and wherein the at least one connecting line orifice (42, 42a, 42b) is designed in such a way that, if at least one adjustable piston of the piston-cylinder device (12) is present in its respective initial position, brake fluid can be transferred from the brake master cylinder (24) via the at least one connecting line (28, 28a, 28b) and its respective connecting line orifice (42, 42a, 42b) into the at least one chamber of the piston-cylinder device (12), while, if the at least one adjustable piston is adjusted from its respective initial position, a brake fluid transfer is prevented from the brake master cylinder (24) via the at least one connecting line (28, 28a, 28b) and its respective connecting line orifice (42, 42a, 42b) into the at least one chamber of the piston-cylinder device (12) by means of at least one seal element (44a, 44b, 44c) fastened to the at least one adjustable piston of the piston-cylinder device (12) and/or fastened in the at least one chamber of the piston-cylinder device (12).

7. Brake system according to any one of the preceding claims, wherein the first wheel brake cylinder (14a) is hydraulically connected via a first isolating valve (20a) to the motorized brake pressure generation device (12), and/or the second wheel brake cylinder (14b) is hydraulically connected via a second isolating valve (20b) to the motorized brake pressure generation device (12).

8. Brake system according to Claim 7, wherein a third check valve (22a) arranged parallel to the first isolating valve (20a) is oriented in such a way that a brake fluid transfer is prevented in a direction from the first wheel brake cylinder (14a) to the motorized brake pressure generation device (12) by means of the third check valve (22a), and/or a fourth check valve (22b) arranged parallel to the second isolating valve (20b) is oriented in such a way that a brake fluid transfer is prevented in a direction from the second wheel brake cylinder (14b) to the motorized brake pressure generation device (12) by means of the fourth check valve (22b).

9. Method for braking an at least two-axle vehicle with the steps:
braking a first wheel of a first axle of the vehicle and a second wheel of the first axle, by brake fluid being transferred (S1), by means of operation of at least one motorized brake pressure generation device (12) of a first axle unit (10) mounted on the first axle, from an attached brake fluid reservoir (16) into a first wheel brake cylinder (14a) assigned to the first wheel of the first axle and into a second wheel brake cylinder (14b) assigned to the second wheel of the first axle; and
braking of a first wheel of a second axle of the vehicle and a second wheel of the second axle by means of operation of a second axle unit (S2) mounted on the second axle and of hydraulically separate design from the first axle unit (10), wherein the first axle unit (10) is of hydraulically separate design from the second axle unit in such a way that the first axle unit (10) and the second axle unit are connected to each other at most via at least one signal and/or bus line, and the first axle unit (10) and the second axle unit can be mounted as two separate units on the two-axle vehicle fitted therewith;
**characterized in that**
brake fluid is drained (S3) from the first wheel brake cylinder (14a) via a first outlet valve (18a) into the attached brake fluid reservoir (16) and from the second wheel brake cylinder (14b) via a second outlet valve (18b) into the attached brake fluid reservoir (16).

## Revendications

1. Système de frein pour un véhicule à au moins deux essieux, avec :
une première unité d'essieu (10) pouvant être montée sur un premier essieu du véhicule avec un dispositif d'accumulation de pression de frein (12) motorisé, un premier cylindre de frein de roue (14a) et un deuxième cylindre de frein de roue (14b), du liquide de frein pouvant être transféré depuis un réservoir de liquide de frein (16) raccordé dans le premier cylindre de frein de roue (14a) et dans le deuxième cylindre de frein de roue (14b) au moyen d'un fonctionnement du dispositif d'accumulation de pression de frein (12) motorisé de telle sorte qu'une première roue du premier essieu associée au premier cylindre de frein de roue (14a) et une deuxième roue du premier essieu associée au deuxième cylindre de frein de roue (14b) peuvent être freinées ; et
une deuxième unité d'essieu pouvant être montée sur un deuxième essieu du véhicule et formée de manière séparée hydrauliquement de la première unité d'essieu (10) de telle sorte qu'une première roue du deuxième essieu et une deuxième roue du deuxième essieu peuvent être freinées au moyen d'un fonctionnement de la deuxième unité d'essieu, la première unité d'essieu (10) étant formée de manière séparée hydrauliquement de la deuxième unité d'essieu de telle manière que la première unité d'essieu (10) et la deuxième unité d'essieu sont reliées l'une à l'autre au maximum par au moins une ligne de transmission de signaux et/ou une ligne de bus, et la première unité d'essieu (10) et la deuxième unité d'essieu peuvent être montées en tant que deux unités séparées sur le véhicule à deux essieux à équiper ;
**caractérisé en ce que**
la première unité d'essieu (10) comprend une première soupape de sortie (18a) associée au premier cylindre de frein de roue (14a) et une deuxième soupape de sortie (18b) associée au deuxième cylindre de frein de roue (14b), et du liquide de frein peut être évacué du premier cylindre de frein de roue (14a) par la première soupape de sortie (18a) et du deuxième cylindre de frein de roue (14b) par la deuxième soupape de sortie (18b) dans le réservoir de liquide de frein (16) raccordé.

2. Système de frein selon la revendication 1, un circuit de freinage de la première unité d'essieu (10) comprenant au moins le premier cylindre de frein de roue (14a), la première soupape de sortie (18a), le deuxième cylindre de frein de roue (14b) et la deuxième soupape de sortie (18b), et le dispositif d'accumulation de pression de frein (12) motorisé étant intégré dans le circuit de freinage ou étant raccordé hydrauliquement au circuit de freinage.

3. Système de frein selon la revendication 1, un premier circuit de freinage de la première unité d'essieu (10) comprenant au moins le premier cylindre de frein de roue (14a) et la première soupape de sortie (18a) et un deuxième circuit de freinage de la première unité d'essieu comprenant au moins le deuxième cylindre de frein de roue (14b) et la deuxième soupape de sortie (18b), et le premier circuit de freinage étant raccordé hydrauliquement à une première chambre du dispositif d'accumulation de pression de frein (12) motorisé formé comme un dispositif piston-cylindre (12), et le deuxième circuit de freinage étant raccordé hydrauliquement à une deuxième chambre du dispositif piston-cylindre (12).

4. Système de frein selon l'une des revendications précédentes, la première unité d'essieu (10) comprenant en supplément un maître-cylindre de frein (24) auquel peut être raccordé ou est raccordé un élément d'actionnement de frein (26) du véhicule de telle manière qu'au moins un piston du maître-cylindre de frein (24) délimitant au moins une chambre du maître-cylindre de frein (24) peut être ajusté au moyen d'un actionnement de l'élément d'actionnement de frein (26) par un conducteur du véhicule, et du liquide de frein pouvant être transféré de l'au moins une chambre du maître-cylindre de frein (24) au moins par au moins une conduite de liaison (28, 28a, 28b) sans soupape ou équipée de soupape dans le premier cylindre de frein de roue (14a) et/ou dans le deuxième cylindre de frein de roue (14b).

5. Système de frein selon la revendication 4, la première soupape de sortie (18a) étant reliée hydrauliquement à la deuxième soupape de sortie (18b) par une section de liaison (34) et la conduite de liaison unique (28) sans soupape ou équipée de soupape débouchant sur la section de liaison (34), et une première soupape anti-retour (36a) disposée parallèlement à la première soupape de sortie (18a) étant orientée de telle manière qu'un transfert de liquide de frein dans une direction allant du premier cylindre de frein de roue (14a) à une embouchure (31) de la conduite de liaison (28) sur la section de liaison (34) est empêché au moyen de la première soupape anti-retour (36a) et/ou une deuxième soupape anti-retour (36b) disposée parallèlement à la deuxième soupape de sortie (18b) étant orientée de telle manière qu'un transfert de liquide de frein dans une direction allant du deuxième cylindre de frein de roue (14b) vers l'embouchure (31) de la conduite de liaison (28) sur la section de liaison (34) est empêché au moyen de la deuxième soupape an-ti-retour (36b).

6. Système de frein selon la revendication 4, **caractérisé en ce que** le dispositif d'accumulation de pression de frein (12) motorisé est un dispositif piston-cylindre (12) avec au moins une chambre et le maître-cylindre de frein (24) est raccordé hydrauliquement au dispositif piston-cylindre (12) par l'au moins une conduite de liaison (28, 28a, 28b) sans soupape ou équipée de soupape de telle manière que l'au moins une conduite de liaison (28, 28a, 28b) comporte chaque fois une embouchure (42, 42a, 42b) de conduite de liaison sur l'au moins une chambre du dispositif piston-cylindre (12), et l'au moins une embouchure (42, 42a, 42b) de conduite de liaison étant formée de telle manière que, dans la mesure où au moins un piston ajustable du dispositif piston-cylindre (12) est présent dans sa position initiale respective, du liquide de frein peut être transféré du maître-cylindre de frein (24) par l'au moins une conduite de liaison (28, 28a, 28b) et son embouchure (42, 42a, 42b) de conduite de liaison respective dans l'au moins une chambre du dispositif piston-cylindre (12), tandis que, dans la mesure où l'au moins un piston ajustable est ajusté hors de sa position initiale respective, un transfert de liquide de frein du maître-cylindre de frein (24) par l'au moins une conduite de liaison (28, 28a, 28b) et son embouchure (42, 42a, 42b) de conduite de liaison respective dans l'au moins une chambre du dispositif piston-cylindre (12) au moyen d'au moins un élément d'étanchéité (44a, 44b, 44c) fixé sur l'au moins un piston ajustable du dispositif piston-cylindre (12) et/ou dans l'au moins une chambre du dispositif piston-cylindre (12) est empêché.

7. Système de frein selon l'une des revendications précédentes, le premier cylindre de frein de roue (14a) étant relié hydrauliquement au dispositif d'accumulation de pression de frein (12) motorisé par une première soupape de séparation (20a) et/ou le deuxième cylindre de frein de roue (14b) étant relié hydrauliquement au dispositif d'accumulation de pression de frein (12) motorisé par une deuxième soupape de séparation (20b).

8. Système de frein selon la revendication 7, une troisième soupape anti-retour (22a) disposée parallèlement à la première soupape de séparation (20a) étant orientée de telle manière qu'un transfert de liquide de frein dans une direction du premier cylindre de frein de roue (14a) vers le dispositif d'accumulation de pression de frein (12) motorisé est empêché au moyen de la troisième soupape anti-retour (22a) et/ou une quatrième soupape anti-retour (22b) disposée parallèlement à la deuxième soupape de séparation (20b) étant orientée de telle manière qu'un transfert de liquide de frein dans une direction du deuxième cylindre de frein de roue (14b) vers le dispositif d'accumulation de pression de frein (12) motorisé est empêché au moyen de la quatrième soupape anti-retour (22b).

9. Procédé de freinage d'un véhicule à au moins deux essieux, avec les étapes de :
freinage d'une première roue d'un premier essieu du véhicule et d'une deuxième roue du premier essieu en ce que du liquide de frein est transféré (S1) d'un réservoir de liquide de frein (16) raccordé dans un premier cylindre de frein de roue (14a) associé à la première roue du premier essieu et dans un deuxième cylindre de frein de roue (14b) associé à la deuxième roue du premier essieu au moyen d'un fonctionnement d'au moins un dispositif d'accumulation de pression de frein (12) motorisé d'une première unité d'essieu (10) montée sur le premier essieu ; et
freinage (S2) d'une première roue d'un deuxième essieu du véhicule et d'une deuxième roue du deuxième essieu au moyen d'un fonctionnement d'une deuxième unité d'essieu montée sur le deuxième essieu et formée de manière séparée hydrauliquement de la première unité d'essieu (10), la première unité d'essieu (10) étant formée de manière séparée hydrauliquement de la deuxième unité d'essieu de telle manière que la première unité d'essieu (10) et la deuxième unité d'essieu sont reliées l'une à l'autre au maximum par au moins une ligne de transmission de signaux et/ou une ligne de bus, et la première unité d'essieu (10) et la deuxième unité d'essieu pouvant être montées comme deux unités séparées sur le véhicule à deux essieux équipé de celles-ci ;
**caractérisé en ce que**
du liquide de frein est évacué (S3) du premier cylindre de frein de roue (14a) par une première soupape de sortie (18a) dans le réservoir de liquide de frein (16) raccordé et du deuxième cylindre de frein de roue (14b) par une deuxième soupape de sortie (18b) dans le réservoir de liquide de frein (16) raccordé.
